# EUROPÄISCHE PATENTSCHRIFT

(11) **EP 3 170 264 B1**
(45) Veröffentlichungstag und Bekanntmachung des Hinweises auf die Patenterteilung: **05.04.2023**
(21) Anmeldenummer: 15741146.3
(22) Anmeldetag: 16.07.2015
(51) Int. Cl.: H04B 1/403

(54) **SIGNALKOPPLUNGSEINRICHTUNG UND VERFAHREN ZUM BETRIEB EINER SIGNALKOPPLUNGSEINRICHTUNG**
SIGNAL COUPLING DEVICE AND METHOD FOR OPERATING A SIGNAL COUPLING DEVICE
DISPOSITIF DE COUPLAGE DE SIGNAUX ET PROCÉDÉ DE FONCTIONNEMENT D'UN DISPOSITIF DE COUPLAGE DE SIGNAUX

(30) Priorität: 17.07.2014 DE 102014213933
(43) Veröffentlichungstag der Anmeldung: 24.05.2017
(73) Patentinhaber: Molex CVS Dabendorf GmbH, 15806 Zossen (DE)
(72) Erfinder: NAST, Helmut, 12557 Berlin (DE); JACOBI, Raimo, 10318 Berlin (DE); WEIGELT, Marcus, 15834 Rangsdorf (DE)
(74) Vertreter: Ramrath, Lukas
(86) Internationale Anmeldenummer: PCT/EP2015/066238
(87) Internationale Veröffentlichungsnummer: WO 2016/008965

(56) Entgegenhaltungen:
- EP-A1- 1 655 872
- DE-A1- 19 536 640
- DE-A1-102007 004 911

## Beschreibung

Die Erfindung betrifft ein Verfahren zum Betrieb einer Signalkopplungseinrichtung sowie eine Signalkopplungseinrichtung.

Aus dem Stand der Technik sind Signalkopplungseinrichtungen bekannt, die zur signaltechnischen Verbindung eines Endgeräts, insbesondere eines Mobiltelefons, mit einer endgeräteexternen Antenne dienen. Derartige Signalkopplungseinrichtungen können insbesondere in Fahrzeugen vorgesehen werden, um ein Endgerät in einem Fahrzeuginnenraum mit einer Fahrzeugantenne signaltechnisch zu verbinden. Hierdurch kann einerseits eine hohe Signalqualität hergestellt, andererseits ein Energieverbrauch beim Betrieb des Endgeräts verringert werden. Derartige Signalkopplungseinrichtungen können hierbei derart ausgebildet sein, dass von der endgeräteexternen Antenne empfangene und zum Endgerät übertragene Signale und/oder vom Endgerät gesendete und an die endgeräteexterne Antenne übertragene Signale verarbeitet und/oder beeinflusst, insbesondere auch verstärkt, werden können.

Die DE 10 2009 027 358 A1 offenbart ein Verfahren und eine Funktionsgruppe zur Schaltung von Signalzweigen einer Schaltungsanordnung zur Verarbeitung und/oder Beeinflussung von Signalen der Funkkommunikation, nach welchem zumindest die Sendezweige der betreffenden Schaltungsanordnung in Abhängigkeit von der Anwesenheit eines Sendesignals eines mit ihr betriebenen, in mindestens einem von mehreren durch die Schaltungsanordnung unterstützten Frequenzbändern arbeitenden Endgeräts für die Funkkommunikation aktiv oder inaktiv geschaltet werden. Weiter werden die in einem Grundzustand der Schaltungsanordnung deaktivierten Sendezweige, welche sich voneinander zumindest insoweit unterscheiden, als dass sie zur Übertragung von Sendesignalen in unterschiedlichen Frequenzbändern ausgebildet sind, zeitperiodisch nacheinander auf das Vorhandensein eines Sendesignals des jeweils mit der Schaltungsanordnung betriebenen Endgeräts überprüft. Bei Anwesenheit eines solchen Sendesignals wird nur der für dessen Frequenzband zutreffende Sendezweig aktiviert und weiterhin auf das Vorhandensein eines Sendesignals überprüft. Weiter wird dieser dann permanent auf das Vorhandensein des Sendesignals überprüfte Sendezweig bei ausbleibendem Sendesignal wieder deaktiviert und nach seiner Deaktivierung die zeitperiodische Überprüfung aller Sendezweige auf das Vorhandensein eines Sendesignals fortgesetzt.

Weiterhin bekannt sind verschiedene Signalarten, die zur bidirektionalen Kommunikation verwendet werden können. insbesondere bekannt sind sogenannte Zeitduplex-Signale, die auch als zeitgeteilte Duplex-Signale bezeichnet werden können, und Frequenzduplex-Signale, die auch als frequenzgeteilte Duplex-Signale bezeichnet werden können. Bei Zeitduplex-Signalen werden Sende- und Empfangssignale mit der gleichen oder mit unterschiedlichen Frequenz(en), aber zeitlich voneinander getrennt, insbesondere in verschiedenen Zeitschlitzen, übertragen. So können Zeitduplex-Signale in einem Simplex-Betrieb übertragen werden, wobei Sende- und Empfangssignal mit der gleichen Frequenz übertragen werden. Alternativ können Zeitduplex-Signale in einem Semi-Duplex-Betrieb übertragen werden, wobei Sende- und Empfangssignale mit unterschiedlichen Frequenzen übertragen werden. Beispielsweise können zeitgeteilte Duplex-Signale für so genannten Uplink-Signale und Downlink-Signale auf verschiedenen Frequenzen übertragen werden.

Bei Frequenzduplex-Signalen werden Sende- und Empfangssignale mit voneinander verschiedenen Frequenzen übertragen. Dies ermöglicht z.B., dass ein Gerät gleichzeitig senden und empfangen kann.

Es kann vorkommen, dass Zeitduplex-Signale und Frequenzduplex-Signale gleiche Frequenzbereiche zur Kommunikation nutzen. Dies wiederum kann bedeuten, dass ein spezifischer Signalzweig der Signalkopplungseinrichtung sowohl zur Übertragung von Zeitduplex-Signalen als auch Frequenzduplex-Signalen vorgesehen ist. Dies kann jedoch folgende Nachteile aufweisen. insbesondere bei Frequenzduplex-Signalen kann beim Senden eine dauerhafte Verstärkung des über dem Signalzweig übertragenen Signals notwendig sein. Wird aber ein Zeitduplex-Signal über diesen Signalzweig übertragen, so ist nur beim Senden in einem Sendezeitschlitz eine Verstärkung des Signals erforderlich. Somit ergibt sich bei einem Zeitduplex-Signal ein unnötig erhöhter Energieverbrauch. Weiter ist in einem Signalzweig zur Übertragung von Frequenzduplex-Signalen ein sogenannter Duplexfilter notwendig, um Sende- und Empfangsteile des Signals signaltechnisch zu trennen. Diese dämpfen jedoch in nachteiliger Weise ein über diesen Signalzweig übertragenes Zeitduplex-Signal. Auch ergibt sich nachteilig, dass die Duplexfilter auf die für Zeitduplex-Signale notwendigen Pegel ausgelegt werden müssen, wodurch die Duplexfilter verteuert und ihr Bauraumbedarf erhöht wird.

Die EP 1 655 872 A1 offenbart eine Mobilkommunikationstechnik, umfassend Mobilkommunikationempfänger und Mobilkommunikationssender, insbesondere eine Technik, um effizient und adaptiv Parameter von Drahtlossystemen in Übereinstimmung mit einer Funkumgebung und Bedingungen, die die Servicequalität beinhalten, anzupassen.

Die DE 10 2007 004 911 A1 offenbart eine mehrbandfähige, zumindest teilweise modular aufgebaute und damit mehrteilige Schaltungsanordnung zum Kompensieren der Dämpfung, welcher ein- und ausgehende HF-Funksignale in Signalwegen zwischen einem Sende- und Empfangsgerät und einer mit diesem Sende- und Empfangsgerät genutzten externen Antenne unterliegen.

Die DE 195 36 640 A1 offenbart eine Schaltung zur Dämpfungskompensation von Antennenzuleitungen im Mobilfunk, insbesondere in GSM- und DCS-Netzen.

Es stellt sich daher das technische Problem, ein Verfahren zum Betrieb einer Signalkopplungseinrichtung sowie eine Signalkopplungseinrichtung zu schaffen, die eine Übertragung von Zeitduplex-Signalen und Frequenzduplex-Signalen in zumindest teilweise gleichen Frequenzbereichen ermöglichen, gleichzeitig jedoch einen Energieverbrauch reduzieren, eine gewünschte Übertragungsqualität gewährleisten und einen Bauraumbedarf sowie Kosten reduzieren.

Die Lösung des technischen Problems ergibt sich durch die Gegenstände mit den Merkmalen der Ansprüche 1 und 11. Weitere vorteilhafte Ausgestaltungen der Erfindung ergeben sich aus den Unteransprüchen.

Es ist eine Grundidee der Erfindung, eine Signalart eines auf einem Signalzweig der Signalkopplungseinrichtung anliegenden Signals zu bestimmen, wobei in Abhängigkeit der Signalart ein Signalzweigverlauf einer Verbindung zwischen einer endgeräteseitigen Schnittstelle und einer antennenseitigen Schnittstelle eingestellt wird und/oder falls das anliegende Signal ein Zeitduplex-Signal ist, eine signalartspezifische Steuerung eines Betriebs mindestens einer Signalverarbeitungseinrichtung erfolgt.

Vorgeschlagen wird ein Verfahren zum Betrieb einer Signalkopplungseinrichtung. Mittels der Signalkopplungseinrichtung kann insbesondere ein Endgerät, insbesondere ein Mobiltelefon, mit einer endgeräteexternen Antenne signaltechnisch verbunden werden. Die Signalkopplungseinrichtung kann hierbei in einem Fahrzeug, insbesondere einem Kraftfahrzeug, angeordnet sein. Die endgeräteexterne Antenne kann hierbei insbesondere eine Fahrzeugantenne sein. Die Signalkopplungseinrichtung kann weiter insbesondere Teil einer Mobilfunkverstärkungsvorrichtung sein oder eine Mobilfunkverstärkungsvorrichtung umfassen.

Im Sinne dieser Erfindung kann eine Verbindung eine signaltechnische Verbindung bezeichnen. Diese kann insbesondere eine galvanische und/oder induktive und/oder kapazitive Verbindung sein. Vorzugsweise ist eine Verbindung eine galvanische Verbindung. innerhalb der Signalkopplungseinrichtung werden vorzugsweise nur galvanische Verbindungen als signaltechnische Verbindungen genutzt. Die Verbindung der Signalkopplungseinrichtung mit dem Endgerät kann jedoch auch eine induktive Verbindung oder eine kapazitive Verbindung sein. Im Sinne dieser Erfindung umfasst der Begriff Verbindung auch eine Signalkopplung oder Kopplung, die nachfolgend noch näher erläutert wird.

Die Signalkopplungseinrichtung umfasst mindestens einen Signalzweigabschnitt, der signaltechnisch mit der endgeräteseitigen Schnittstelle verbunden oder verbindbar ist. Hierbei bezeichnet die endgeräteseitige Schnittstelle eine Schnittstelle, über die eine signaltechnische Verbindung zwischen der Signalkopplungseinrichtung und dem Endgerät hergestellt werden kann. Die endgeräteseitige Schnittstelle kann hierbei eine bidirektionale Übertragung von Signalen ermöglichen. Der Signalzweigabschnitt dient hierbei zur Herstellung einer signaltechnischen Verbindung und/oder der Übertragung eines Signals. Der Signalzweigabschnitt kann beispielsweise als Leiter oder Leiterbahn ausgebildet sein.

Weiter kann die Signalkopplungseinrichtung eine antennenseitige Schnittstelle umfassen. Diese kann eine Schnittstelle bezeichnen, über die eine Verbindung zwischen der endgeräteexternen Antenne, beispielsweise der Fahrzeugantenne, und der Signalkopplungsvorrichtung hergestellt werden kann. Auch diese Schnittstelle kann eine bidirektionale Verbindung ermöglichen.

Vorzugsweise ist die endgeräteexterne Antenne galvanisch mit der antennenseitigen Schnittstelle der Signalkopplungseinrichtung verbunden. Die endgeräteexterne Antenne kann auch Teil der Signalkopplungseinrichtung sein. Die endgeräteseitige Schnittstelle kann insbesondere einer induktiven Verbindung mit dem Endgerät dienen. Hierfür kann die endgeräteseitige Schnittstelle eine weitere Antenne umfassen.

Es ist möglich, dass der Signalzweigabschnitt einen Abschnitt eines Signalpfades oder -zweiges bezeichnet, über den die signaltechnische Verbindung zwischen der endgeräteseitigen Schnittstelle und der antennenseitigen Schnittstelle hergestellt wird oder herstellbar ist. Wie nachfolgend noch näher erläutert, können verschiedene Signalpfade zwischen endgeräteseitiger Schnittstelle und antennenseitiger Schnittstelle durch die Signalkopplungseinrichtung hergestellt werden, wobei ein Signalpfad einer signaltechnischen Verbindung dient. Der Signalzweigabschnitt kann hierbei insbesondere ein Abschnitt sein, der Teil jeder herstellbaren Verbindung zwischen endgeräteseitiger Schnittstelle und antennenseitiger Schnittstelle ist. insbesondere kann der Signalzweigabschnitt ein Abschnitt eines Sendesignalzweiges oder Sendesignalpfades sein, welcher Teil einer signaltechnischen Verbindung zwischen endgeräteseitiger Schnittstelle und antennenseitiger Schnittstelle ist, falls ein vom Endgerät gesendetes Signal an die endgeräteexterne Antenne übertragen werden soll.

Vorzugsweise ist der Signalzweigabschnitt jedoch nicht Teil der Verbindung, die zwischen endgeräteseitiger Schnittstelle und antennenseitiger Schnittstelle herstellbar ist.

Ein Empfangssignalzweig zur Übertragung eines von der endgeräteexternen Antenne empfangenen Signals an das Endgerät kann hierbei vom Sendesignalzweig verschieden ausgebildet sein. Insbesondere kann der Signalzweigabschnitt auch kein Teil eines solchen Empfangssignalzweigs sein.

Weiter wird mindestens eine Signaleigenschaft eines auf dem mindestens einen Signalzweigabschnitt anliegenden Signals bestimmt. Eine Signaleigenschaft kann insbesondere ein Pegel bzw. eine Intensität des anliegenden Signales sein. Die Bestimmung einer Signaleigenschaft umfasst hierbei selbstverständlich die Bestimmung eines zeitlichen Verlaufs der Signaleigenschaft, beispielsweise einen zeitlichen Verlauf des Signalpegels. Ein Signal kann beispielsweise auf dem Signalzweigabschnitt anliegen, falls das Signal über den Signalzweigabschnitt übertragen wird. Der Signalzweigabschnitt kann somit auch als Detektions-Signalzweigabschnitt bezeichnet werden.

Weiter wird in Abhängigkeit der mindestens einen Signaleigenschaft eine Signalart bestimmt, wobei als Signalart ein Zeitduplex-Signal oder ein Frequenzduplex-Signal bestimmt wird.

Eigenschaften des Zeitduplex- und Frequenzduplex-Signals wurden einleitend bereits beschrieben. Ein zeitlicher Verlauf eines Zeitduplex-Signals kann hierbei Sendezeitschlitze und Empfangszeitschlitze aufweisen, wobei in Sendezeitschlitzen ein Signalpegel, insbesondere ein mittlerer Signalpegel, höher sein kann als in Empfangszeitschlitzen. Ein Zeitduplex-Signal kann hierbei in Signalperioden unterteilt sein, wobei eine Periode in eine vorbestimmte Anzahl von Zeitschlitzen unterteilt sein kann, wobei eine vorbestimmte Unteranzahl dieser Zeitschlitze als Sendezeitschlitze und die verbleibende Anzahl als Empfangszeitschlitze vorgesehen sein kann. Beispielsweise kann eine Signalperiode acht Zeitschlitze aufweisen, wobei ein oder zwei oder mehr, insbesondere bis zu acht, Zeitschlitze, beispielsweise der erste oder die ersten beiden Zeitschlitze, als Sendezeitschlitz(e) vorgesehen ist/sind und die verbleibenden Zeitschlitze als Empfangszeitschlitze vorgesehen sind.

Ein Frequenzduplex-Signal weist keine derartige Veränderung eines Signalpegels, insbesondere also einen im Wesentlichen konstanten Signalpegel, auf. So kann das Frequenzduplex-Signal ein so genanntes CW-Signal (continuous-wave-signal) sein.

Somit kann also die Signalart vorzugsweise in Abhängigkeit eines zeitlichen Verlaufs des Signalpegels bestimmt werden. Hierzu können beispielsweise geeignete Schwellwertverfahren zur Detektion bestimmter Signalpegel verwendet werden. Wird als Signalart ein Zeitduplex-Signal bestimmt, so kann weiter ein Übertragungsbetrieb, insbesondere ein Simplex-Übertragungsbetrieb oder ein Semi-Duplex-Übertragungsbetrieb bestimmt werden.

Weiter erfolgt eine signalartspezifische Steuerung eines Betriebs mindestens einer Signalverarbeitungseinrichtung der Signalkopplungseinrichtung. Die signalartspezifische Steuerung kann jedoch insbesondere nur dann erfolgen, falls ein Zeitduplex-Signal bestimmt bzw. detektiert wurde. Die signalartspezifische Steuerung kann in Abhängigkeit der Signalart erfolgen.

Eine Signalverarbeitungseinrichtung bezeichnet hierbei eine Einrichtung, durch die mindestens eine Signaleigenschaft eines übertragenen Signals veränderbar und/oder beeinflussbar ist. Die Signalverarbeitungseinrichtung kann hierbei eine aktive oder passive Signalverarbeitungseinrichtung sein. Insbesondere kann die Signalverarbeitungseinrichtung als elektronisches Bauelement ausgebildet sein.

Vorzugsweise kann die signalartspezifische Steuerung eines Betriebs der mindestens einen Signalverarbeitungseinrichtung eine Aktivierung und eine Deaktivierung der mindestens einen Signalverarbeitungseinrichtung umfassen oder sein. Hierbei kann sich die mittels einer aktivierten Signalverarbeitungseinrichtung durchführbare Veränderung und/oder Beeinflussung der mindestens einen Signaleigenschaft von der mittels einer deaktivierten Signalverarbeitungseinrichtung durchführbaren Veränderung und/oder Beeinflussung unterscheiden. Insbesondere kann nur mit einer aktivierten Signalverarbeitungseinrichtung eine Veränderung und/oder Beeinflussung erfolgen.

Weiter kann eine zeitliche Steuerung des Betriebs in Abhängigkeit eines zeitlichen Verlaufs der mindestens einen Signaleigenschaft erfolgen, insbesondere eine zeitverlaufsabhängige Aktivierung und Deaktivierung der mindestens einen Signalverarbeitungseinrichtung. Hierdurch kann in vorteilhafter Weise ausgenutzt werden, dass nur in Sendezeitschlitzen eines Zeitduplex-Signals eine gewünschte Signalverarbeitung, insbesondere eine Verstärkung, des anliegenden Signals, also des Sendesignals, notwendig ist, während in Empfangszeitschlitzen keine Veränderung oder eine andere Veränderung gewünscht ist.

Selbstverständlich kann die Steuerung des Betriebes der mindestens einen Signalverarbeitungseinrichtung auch die Steuerung bzw. Einstellung einer Veränderung von mindestens einer Signaleigenschaft umfassen. Beispielsweise kann die signalartspezifische Steuerung eines Betriebs auch die Steuerung bzw. Einstellung eines Verstärkungsfaktors umfassen.

Erfindungsgemäß wird ein zukünftiger Signalverlauf des anliegenden Signals geschätzt. Dieser zukünftige Signalverlauf kann somit auch als geschätzter Signalverlauf bezeichnet werden. Die Schätzung kann hierbei auch als eine Bestimmung oder Prädiktion des zukünftigen Signalverlaufs bezeichnet werden. Weiter erfolgt die signalartspezifische Steuerung der mindestens einen Signalverarbeitungseinrichtung in Abhängigkeit des geschätzten zeitlichen Verlaufs. Insbesondere können in Abhängigkeit des geschätzten zeitlichen Verlaufs Zeitabschnitte, insbesondere Zeitschlitze, bestimmt werden, in denen ein Signal von dem Endgerät gesendet wird. Weiter kann die Signalverarbeitungseinrichtung derart gesteuert werden, dass während dieser Zeitabschnitte eine gewünschte Signalverarbeitung durch die mindestens eine Signalverarbeitungseinrichtung erfolgt. Erfindungsgemäß wird, wie nachfolgend noch näher erläutert, die mindestens eine Signalverarbeitungseinrichtung zeitlich vor Beginn eines Sendezeitabschnitts aktiviert und zeitlich nach dem Sendezeitabschnitt deaktiviert.

Das Aktivieren oder Deaktivieren der Signalverarbeitungseinrichtung kann einem Schaltvorgang, z.B. einem Einschalten oder Ausschalten, entsprechen. Durch einen solchen Schaltvorgang kann ein so genanntes Schaltspektrum erzeugt werden. Dies kann dazu führen, dass zu einem übertragenen Signal, insbesondere zu einem Sendesignal, Signalanteile in unerwünschten Frequenzbereichen hinzugefügt werden. Die vorgeschlagene signalartspezifische Steuerung in Abhängigkeit des geschätzten zeitlichen Verlaufs ermöglicht in vorteilhafter Weise die Reduktion dieser unerwünschten Signalanteile, da dann zum Zeitpunkt des Schaltvorgangs noch kein Signal oder kein Signal mehr übertragen wird, dessen Eigenschaft durch die Signalverarbeitungseinrichtung verändert und/oder beeinflusst wird.

Hierdurch ergibt sich einerseits eine Energieersparnis beim Betrieb der Signalkopplungseinrichtung, da die Signalverarbeitungseinrichtung nicht dauerhaft aktiviert ist. Weiter ergibt sich jedoch in vorteilhafter Weise, dass keine unerwünschte Signalverfälschung durch zu spätes Aktivieren bzw. zu frühes Deaktivieren der mindestens einen Signalverarbeitungseinrichtung erfolgt.

Weiter wird ein Anfangszeitpunkt mindestens eines zukünftigen Sendezeitabschnitts und/oder ein Endzeitpunkt des mindestens einen zukünftigen Sendezeitabschnitts bestimmt. Ein Sendezeitabschnitt kann hierbei einen oder mehrere aufeinander folgende Sendezeitschlitz(e), insbesondere einer Signalperiode, umfassen. Weiter wird der Betrieb der mindestens einen Signalverarbeitungseinrichtung in Abhängigkeit des Anfangszeitpunkts und/oder des Endzeitpunkts gesteuert. Weiter erfindungsgemäß wird die mindestens eine Signalverarbeitungseinrichtung zeitlich vor, insbesondere um eine vorbestimmte Zeitdauer vor dem Anfangszeitpunkt, aktiviert und zeitlich nach, insbesondere um eine vorbestimmte Zeitdauer zeitlich nach dem Endzeitpunkt, deaktiviert. Die vorbestimmte Zeitdauer vor dem Anfangszeitpunkt kann hierbei in Abhängigkeit von Betriebseigenschaften der mindestens einen Signalverarbeitungseinrichtung gewählt werden. Die vorbestimmte Zeitdauer ist insbesondere derart zu wählen, dass zum Anfangszeitpunkt die gewünschte Signalverarbeitung, beispielsweise die gewünschte Verstärkung, gewährleistet wird.

In einer weiteren Ausführungsform wird in Abhängigkeit der Signalart eine signalartspezifische Verbindung zwischen der endgeräteseitigen Schnittstelle und der antennenseitigen Schnittstelle hergestellt. Beispielsweise kann die endgeräteseitige Schnittstelle mit einem Teilzweig aus einer Gruppe von mindestens zwei Teilzweigen verbunden werden, wobei die endgeräteseitige Schnittstelle über jeden der Teilzweige aus der Gruppe von mindestens zwei Teilzweigen mit der antennenseitigen Schnittstelle verbindbar ist. Somit können also mehrere mögliche Signalpfade von der endgeräteseitigen Schnittstelle hin zur antennenseitigen Schnittstelle, z.B. einer der Teilzweige, herstellbar sein, wobei der herzustellende Signalpfad signalartspezifisch gewählt wird. Beispielsweise kann, falls als Signal ein Frequenzduplex-Signal bestimmt wird, die Verbindung zwischen der endgeräteseitigen Schnittstelle und der antennenseitigen Schnittstelle ein Duplex-Filterelement umfassen oder aufweisen. Mittels des Duplex-Filterelements ist die Aufteilung in Sende- und Empfangssignale und deren parallele Verarbeitung möglich.

Weiter kann, falls als Signalart ein Zeitduplex-Signal und gegebenenfalls zusätzlich ein vorbestimmter Übertragungsbetrieb des Zeitduplex-Signals, bestimmt wird, die Verbindung zwischen der endgeräteseitigen Schnittstelle und der antennenseitigen Schnittstelle eine Duplex-Filterelement-freie Verbindung sein. In diesem Fall umfasst also die Verbindung kein Duplex-Filterelement. Dies kann insbesondere bei Zeitduplex-Signalen, die im Simplex-Betrieb übertragen werden, der Fall sein. Bei Signalen, die im Semi-Duplex-Verfahren übertragen werden, können jedoch die Duplex-Filterelemente in der Verbindung vorhanden sein. Selbstverständlich kann eine Verbindung ohne Duplex-Filterelement jedoch weitere Elemente der Signalkopplungsvorrichtung enthalten, z.B. eine Verstärkereinrichtung. Dies wird nachfolgend näher erläutert. Die Herstellung einer signalartspezifischen Verbindung kann hierbei insbesondere mittels einer Teilzweig-Schalteinheit und/oder einer Antennenschalteinheit erfolgen, wobei eine Schalteinheit einen Eingangssignalzweig, insbesondere von mehreren Eingangssignalzweigen, der Schalteinheit mit einem Ausgangssignalzweig, insbesondere von mehreren Ausgangssignalzweigen, der Schalteinheit verbinden kann.

Somit ergibt sich in vorteilhafter Weise, dass bei einem anliegenden Zeitduplex-Signal, insbesondere bei einem Zeitduplex-Signal, welches im Simplex-Übertragungsbetrieb, der auch als Ein-Frequenz-Simplex-Übertragungsbetrieb bezeichnet werden kann, oder im Zwei-Frequenz-Simplex-Übertragungsbetrieb übertragen wird, keine zusätzliche Dämpfung durch ein unnötiges Duplex-Filterelement in den Signalpfad zwischen endgeräteseitiger Schnittstelle und antennenseitiger Schnittstelle eingefügt wird. Weiter ergibt sich in vorteilhafter Weise aufgrund der Tatsache, dass nunmehr Zeitduplex-Signale und Frequenzduplex-Signale über voneinander verschiedene Signal(teil)pfade übertragen werden können, dass über ein Duplex-Filterelement kein Zeitduplex-Signal, insbesondere kein Zeitduplex-Signal, welches im Simplex-Übertragungsbetrieb übertragen wird, mehr übertragen wird. Somit können Duplex-Filterelemente mit geringerer Belastbarkeit verwendet werden. Dies reduziert einerseits Kosten, andererseits einen Bauraumbedarf der Signalkopplungseinrichtung.

In einer weiteren Ausführungsform ist die Signalverarbeitungseinrichtung eine Verstärkereinrichtung. Die Verstärkereinrichtung kann hierbei ein Sendesignal, insbesondere um ein vorbestimmtes Maß, verstärken. Die Verstärkereinrichtung kann Teil jedes der vorhergehend erläuterten Teilzweige zur Verbindung der endgeräteseitigen Schnittstelle mit der antennenseitigen Schnittstelle sein, d.h. jedes übertragene Signal verstärken. Alternativ kann auch in jedem der vorhergehend erläuterten Teilzweige jeweils eine Verstärkereinrichtung angeordnet sein.

Hierdurch ergibt sich in vorteilhafter Weise ein besonders energiesparender Betrieb der Signalkopplungseinrichtung, da eine Verstärkereinrichtung zur Verstärkung des Sendesignals zusätzliche Energie benötigt. Durch Deaktivierung während eines oder mehrerer Empfangszeitabschnitte, insbesondere während Empfangszeitschlitzen, wird die benötigte Energie reduziert.

In einer weiteren Ausführungsform wird ein Standard einer über das anliegende Signal erfolgenden Kommunikation oder Signalübertragung bestimmt, wobei der zukünftige Signalverlauf zusätzlich in Abhängigkeit von vorbekannten Eigenschaften des Standards bestimmt wird.

Der Standard kann beispielsweise signalpfadabhängig bestimmt werden. Dies wird nachfolgend näher erläutert. Selbstverständlich ist es aber auch möglich, den Standard frequenzabhängig zu bestimmen, wobei eine Frequenz des anliegenden Signals bestimmt und in Abhängigkeit der Frequenz der entsprechende Standard bestimmt wird.

Es ist eine Vielzahl von möglichen Standards der Kommunikation oder Signalübertragung vorstellbar. Beispielsweise kann ein Standard ein GSM850-Standard, ein GSM900-Standard, ein GSM1800-Standard, ein GSM1900-Standard, ein UMTS-Standard oder ein LTE-Standard sein.

Insbesondere in dem Fall, in dem der Standard eine Signalübertragung mit einem Zeitduplex-Signal vorsieht, kann in vorteilhafter Weise ein zukünftiger Signalverlauf besser geschätzt werden. Beispielsweise kann eine vorbekannte, standardspezifische Aufteilung der Signalperiode in Sendezeitschlitze und Empfangszeitschlitze vorbekannt sein bzw. gelernt werden und somit bestimmbar sein. Somit kann die Schätzung in vorteilhafter Weise unter Kenntnis der vorbekannten Aufteilung verbessert werden. Dies wiederum ermöglicht eine verbesserte Einhaltung einer gewünschten Signalübertragungsqualität.

In einer weiteren Ausführungsform wird eine Abweichung des geschätzten Signalverlaufs von einem sich tatsächlich einstellenden Signalverlauf bestimmt, wobei eine erneute Schätzung des zukünftigen Signalverlaufs durchgeführt wird, falls eine Abweichung größer als ein vorbestimmtes Maß ist.

Hierdurch kann in vorteilhafter Weise sichergestellt werden, dass eine gewünschte Prädiktionsqualität hergestellt ist.

Beispielsweise kann ein zeitlicher Verlauf einer Differenz zwischen dem geschätzten Signalverlauf und dem tatsächlichen Signalverlauf bestimmt werden, wobei eine unerwünschte Abweichung vorliegt, falls die Differenz bzw. ein Betrag der Differenz größer als ein vorbestimmter Schwellwert ist.

In einer weiteren Ausführungsform ist eine Schalteinheit über eine erste Gruppe von mindestens zwei Eingangssignalzweigen mit der endgeräteseitigen Schnittstelle verbunden, wobei der mindestens eine Signalzweigabschnitt einen Ausgangssignalzweig der Schalteinheit bildet oder mit dem Ausgangssignalzweig verbunden ist. Weiter wird durch die Schalteinheit ein ausgewählter Eingangssignalzweig aus der ersten Gruppe von mindestens zwei Eingangssignalzweigen mit dem Ausgangssignalzweig verbunden. Es ist selbstverständlich auch vorstellbar, dass mehr als ein Ausgangssignalzweig vorhanden ist, wobei ein ausgewählter Eingangssignalzweig mit einem ausgewählten Ausgangssignalzweig aus einer Menge von Ausgangssignalzweigen verbunden wird.

Die endgeräteseitige Schnittstelle kann somit sowohl mit der Schalteinheit als auch mit der der endgeräteexternen Antenne verbindbar sein, insbesondere über voneinander unabhängige bzw. verschiedene Signalpfade. So kann die endgeräteseitige Schnittstelle beispielsweise mit einer Signalverzweigungseinrichtung verbunden sein, wobei ein erster Ausgang der Signalverzweigungseinrichtung mit der Schalteinheit verbunden oder verbindbar ist und ein weiterer Ausgang der Signalverzweigungseinrichtung mit der endgeräteexternen Antenne verbindbar ist.

Unter dem Ausgangssignalzweig kann auch ein Ausgangsanschluss oder eine Ausgangsschnittstelle der Schalteinheit verstanden werden. Mittels der Schalteinheit ist jeder der Eingangssignalzweige der ersten Gruppe von Eingangssignalzweigen mit dem Ausgangssignalzweig der Schalteinheit verbindbar, wobei zu einem Zeitpunkt nur ein Eingangssignalzweig der ersten Gruppe von Eingangssignalzweigen mit dem Ausgangssignalzweig der Schalteinheit verbindbar ist. Die Eingangssignalzweige der ersten Gruppe von Eingangssignalzweigen können zur Übertragung eines Sendesignals des Endgeräts zu der Schalteinheit dienen.

Vorzugsweise dienen die einzelnen Eingangssignalzweige der ersten Gruppe von Eingangssignalzweigen zur Übertragung von Signalen mit verschiedenen Frequenzbereichen (Frequenzbändern), insbesondere zur Übertragung von Signalanteilen des Sendesignals mit verschiedenen Frequenzbereichen. Somit können die einzelnen Eingangssignalzweige sich voneinander zumindest insoweit unterscheiden, als dass sie zur Übertragung von Signalen in unterschiedlichen Frequenzbereichen ausgebildet sind.

Die Schaltungsanordnung kann z.B. fünf Eingangssignalzweige der ersten Gruppe von Eingangssignalzweigen umfassen. Beispielsweise können mittels verschiedener Eingangssignalzweige Signale gemäß des GSM850-Standards, des GSM900-Standards, des GSM1800-Standards, des GSM1900-Standards, des UMTS-Standards oder eines weiteren Standards übertragen werden. Auch können z.B. Signale gemäß einem LTE-Standard übertragen werden. Weiter können Zeitduplex-Signale oder Frequenzduplex-Signale übertragen werden. Die Erfindung ist hierbei jedoch nicht auf die genannten Standards und Verfahren beschränkt und betrifft somit alle dem Fachmann bereits bekannten als auch zukünftige Standards und Verfahren.

Z.B. kann zwischen der Schalteinheit und der vorhergehend erläuterten endgeräteseitigen Schnittstelle mindestens ein Filterelement angeordnet sein, wobei mittels des mindestens einen Filterelements das an der Schnittstelle empfangene Signal, insbesondere das Sendesignal des Endgeräts, in verschiedene Frequenzbereiche aufteilbar ist, wobei diese Anteile dann über die verschiedenen Eingangssignalzweige der ersten Gruppe von Eingangssignalzweigen an die Schalteinheit übertragen werden. Das Filterelement kann somit ein bandspezifisches Filterelement sein. Auch ist es möglich, dass in jedem Eingangssignalzweig ein bandspezifisches Filterelement angeordnet ist, wobei somit zu einem Eingangsanschluss der Schalteinheit nur Signale mit Frequenzen aus einem vorbestimmten Frequenzbereich übertragen werden.

Die verschiedenen Eingangssignalzweige der ersten Gruppe von Eingangssignalzweigen können hierbei jeweils einen Teil eines Signalpfades von der endgeräteseitigen Schnittstelle zur antennenseitigen Schnittstelle ausbilden, wobei der Signalpfad in diesem Falle also einen Eingangssignalzweig und den vorgeschlagenen Signalzweigabschnitt umfasst. Vorzugsweise sind die verschiedenen Eingangssignalzweige der ersten Gruppe von Eingangssignalzweigen jedoch kein Teil des Signalpfades von der endgeräteseitigen Schnittstelle zur antennenseitigen Schnittstelle.

Weiter kann, wie nachfolgend noch näher erläutert, ein aktivierter Eingangssignalzweig der ersten Gruppe von Eingangssignalzweigen durch die Schalteinheit mit dem Ausgangssignalzweig der Schalteinheit verbindbar sein. Im Sinne dieser Erfindung bezeichnet ein aktivierter Eingangssignalzweig der ersten Gruppe von Eingangssignalzweigen einen mit einem Signal, insbesondere einem Sendesignal, beaufschlagten Eingangssignalzweig. Entsprechend bezeichnet ein deaktivierter Eingangssignalzweig der ersten Gruppe von Eingangssignalzweigen einen nicht mit einem Signal beaufschlagten Eingangssignalzweig. Wie nachfolgend näher erläutert, kann ein Aktivierungszustand der Eingangssignalzweige der ersten Gruppe von Eingangssignalzweigen bestimmt werden, wobei dann der detektierte aktivierte Eingangssignalzweig mit dem Ausgangssignalzweig der Schalteinheit verbunden wird. Die Bestimmung des Aktivierungszustands kann hierbei die Prüfung der Eingangssignalzweige der ersten Gruppe von Eingangssignalzweigen auf eine Aktivierung oder Deaktivierung hin bezeichnen.

Da die Eingangssignalzweige der ersten Gruppe von Eingangssignalzweigen, wie vorhergehend erläutert, frequenz(bereichs)spezifische Eingangssignalzweige sind, kann in Abhängigkeit des Aktivierungszustandes auch bestimmt werden, in welchem Frequenzbereich Signale vom Endgerät gesendet und/oder empfangen werden. Dies wiederum ermöglicht die vorhergehend erläuterte Bestimmung des Standards der Kommunikation. Somit kann also in Abhängigkeit eines Aktivierungszustands von Eingangssignalzweigen ein Standard einer über das anliegende Signal erfolgenden Kommunikation bestimmt werden, wobei der zukünftige Signalverlauf zusätzlich in Abhängigkeit von vorbekannten Eigenschaften des Standards bestimmt wird.

Es ist möglich, dass die Signalkopplungseinrichtung nur eine Schalteinheit umfasst. In diesem Fall können die Eingangssignalzweige der ersten Gruppe von Eingangssignalzweigen kontinuierlich, z.B. periodisch, oder zu vorbestimmten Zeitpunkten auf ihren Aktivierungszustand hin überprüft werden. Die Bestimmung des Aktivierungszustands der Eingangssignalzweige der ersten Gruppe von Eingangssignalzweigen kann beispielsweise dann (erneut) beginnen, falls auf einem aktuell mit dem Ausgangssignalzweig verbundenen Eingangssignalzweig kein beaufschlagtes Signal mehr detektierbar ist, insbesondere für eine vorbestimmte Zeitdauer.

Der Ausgangssignalzweig der Schalteinheit kann beispielsweise einer Verbindung der Schalteinheit mit einer nachfolgend noch näher erläuterten Auswerteeinrichtung dienen. Hierbei ist es möglich, dass die Verbindung der ersten Schalteinheit mit der Auswerteeinrichtung weitere Elemente umfasst, beispielsweise eine Detektoreinrichtung. Dies wird ebenfalls nachfolgend näher erläutert. Beispielsweise kann die Signalkopplungseinrichtung eine erste Auswerteeinrichtung umfassen, wobei mittels der ersten Auswerteeinrichtung der aktivierte Eingangssignalzweig detektierbar ist. Die erste Auswerteeinrichtung kann beispielsweise eine Pegelmesseinrichtung sein oder eine solche umfassen. Die erste Auswerteeinrichtung kann über den Ausgangssignalzweig der Schalteinheit mit der Schalteinheit verbunden sein. Weiter kann die Schaltungsanordnung eine Steuereinrichtung umfassen, die die Schalteinheit, insbesondere mindestens ein Schaltelement der Schalteinheit, derart steuert, dass ein ausgewählter Eingangssignalzweig mit dem Ausgangssignalzweig der Schalteinheit verbunden wird. Wie nachfolgend noch näher erläutert, kann die Signalkopplungseinrichtung jedoch auch mehr als eine, insbesondere zwei, Schalteinheiten umfassen. Eine Auswerteeinrichtung kann beispielsweise als Mikrocontroller ausgeführt sein.

In einer weiteren Ausführungsform ist eine erste Schalteinheit über mindestens zwei Eingangssignalzweige der ersten Gruppe von Eingangssignalzweigen mit der endgeräteseitigen Schnittstelle verbunden, wobei durch die erste Schalteinheit ein ausgewählter Eingangssignalzweig der ersten Gruppe von Eingangssignalzweigen mit einem Ausgangssignalzweig der ersten Schalteinheit verbunden wird. Weiter ist eine weitere Schalteinheit über mindestens zwei Eingangssignalzweige einer weiteren Gruppe von Eingangssignalzweigen mit der endgeräteseitigen Schnittstelle verbunden, wobei ein ausgewählter Eingangssignalzweig aus der weiteren Gruppe von Eingangssignalzweigen mit einem Ausgangssignalzweig der weiteren Schalteinheit verbunden wird, wobei der mindestens eine Signalzweigabschnitt den Ausgangssignalzweig der weiteren Schalteinheit bildet oder mit dem Ausgangssignalzweig der weiteren Schalteinheit verbunden ist.

Die ausgewählten Eingangssignalzweige der beiden Schalteinheiten können hierbei unabhängig voneinander ausgewählt werden. Dies bedeutet, dass die Ausgangssignalzweige der Schalteinheiten jeweils mit korrespondierenden Eingangssignalzweigen oder aber mit nicht korrespondierenden Eingangssignalzweigen verbunden werden können.

Die Eingangssignalzweige der ersten Gruppe und der weiteren Gruppe können hierbei zumindest abschnittsweise gemeinsam ausgebildet sein. Es ist jedoch auch möglich, dass die Eingangssignalzweige der ersten und der weiteren Gruppe vollständig voneinander verschieden ausgebildet sind. In diesem Fall umfasst die Signalkopplungseinrichtung zwei Schalteinheiten, wobei die erste Schalteinheit als Detektionseinheit und die weitere Schalteinheit als Überwachungseinheit bezeichnet werden kann. Dies wird nachfolgend näher erläutert.

Ein Ausgangssignalzweig der weiteren Schalteinheit kann hierbei ein Teil der erfindungsgemäß mittels der Signalkopplungseinrichtung herzustellenden signaltechnischen Verbindung sein, insbesondere ein Teil der Verbindung zwischen Endgerät und externer Antenne. Vorzugsweise sind jedoch weder die Eingangssignalzweige der weiteren Gruppe noch der Ausgangssignalzweig der weiteren Schalteinheit Teil des Signalpfades von der endgeräteseitigen zur antennenseitigen Schnittstelle. Unter dem Ausgangssignalzweig kann auch ein Ausgangsanschluss oder eine Ausgangsschnittstelle der weiteren Schalteinheit verstanden werden.

Mittels der weiteren Schalteinheit ist jeder der Eingangssignalzweige der weiteren Gruppe von Eingangssignalzweigen mit dem Ausgangssignalzweig der weiteren Schalteinheit verbindbar, wobei zu einem Zeitpunkt nur ein Eingangssignalzweig mit dem Ausgangssignalzweig der weiteren Schalteinheit verbindbar ist.

Die Schalteinheiten können beispielsweise jeweils n Eingangsanschlüsse und genau je einen Ausgangsanschluss aufweisen, wobei korrespondierende Eingangsanschlüsse der Schalteinheiten jeweils mit einem der Eingangssignalzweige der entsprechenden Gruppe verbunden sind. Hierbei ist n > 1. Korrespondierende Eingangsanschlüsse der Schalteinheiten bezeichnen hierbei Eingangsanschlüsse, die jeweils mit einem Eingangssignalzweig verbunden sind, über den das gleiche Signal übertragen wird. Insbesondere können korrespondierende Eingangsanschlüsse mit demselben Eingangssignalzweig verbunden sein.

Es ist vorstellbar, dass ein Eingangssignalzweig einen gemeinsamen Teilabschnitt, einen Abzweigepunkt, einen ersten Teilabschnitt und einen weiteren Teilabschnitt aufweisen, wobei der gemeinsame Teilabschnitt im Abzweigepunkt in den ersten und weiteren Teilabschnitt verzweigt, wobei der erste Teilabschnitt mit einem der Eingangsanschlüsse der ersten Schalteinheit und der weitere Teilabschnitt mit einem korrespondierenden Eingangsanschluss der weiteren Schalteinheit verbunden ist. Der gemeinsame Teilabschnitt kann hierbei einen gemeinsamen Abschnitt eines Eingangssignalzweigs der ersten und der weiteren Gruppe von Eingangssignalzweigen bezeichnen. Der erste Teilabschnitt bezeichnet in diesem Fall einen Abschnitt eines Eingangssignalzweigs der ersten Gruppe, während der weitere Teilabschnitt einen Abschnitt eines Eingangssignalzweigs der weiteren Gruppe bezeichnet.

Der Ausgangssignalzweig der weiteren Schalteinheit kann mit der vorhergehend erläuterten Teilzweig-Schalteinheit oder einer Verstärkereinrichtung verbindbar sein. Vorzugsweise ist jedoch der Ausgangssignalzweig der weiteren Schalteinheit mit der vorhergehend erläuterten Auswerteeinrichtung oder einer weiteren Auswerteeinrichtung verbunden.

Die vorgeschlagene Schaltungsanordnung ermöglicht in vorteilhafter Weise, dass ein aktivierter Eingangssignalzweig durch die weitere Schalteinheit dauerhaft mit dem Ausgangssignalzweig der weiteren Schalteinheit verbindbar ist, wobei mittels der ersten Schalteinheit die Eingangssignalzweige abwechselnd mit dem Ausgangssignalzweig der ersten Schalteinheit verbunden werden können und der Ausgangssignalzweig dann auf einen Anwesenheit eines Signals überprüft werden kann.

Wird, wie nachfolgend noch näher erläutert, die erste Schalteinheit dazu genutzt, kontinuierlich, zu bestimmten Zeitpunkten oder bei Detektion bestimmter Signalzustände auf dem aktuell überwachten Sginalzweig, insbesondere bei Detektion einer Deaktivierung, die aktuell nicht aktivierten oder alle Eingangssignalzweige auf eine Aktivierung/Deaktivierung hin zu überprüfen, so kann ein plötzlicher Wechsel der Aktivierung der Eingangssignalzweige schneller detektiert werden, da insbesondere nicht unbedingt zuerst eine Deaktivierung detektiert und danach erst ein erneuter Suchlauf gestartet werden muss. Dies verringert in vorteilhafter Weise einen Signalverlust beim Wechsel von Aktivierungszuständen der Eingangssignalzweige. Weiter kann ein bisher aktivierter Signalzweig durch die weitere Schalteinheit weiterhin mit einer Auswerteeinrichtung verbunden bleiben, wobei dies in vorteilhafter Weise eine zuverlässigere Überwachung der Signale auf diesem bisher aktivierten Signalzweig ermöglicht. Insbesondere in dem Fall einer Signalpause, in der kein Signal über den bisher aktivierten Signalzweig übertragen wurde, der Signalzweig aber nicht deaktiviert wurde, kann nach Ende des Signalpause das Signal ohne Zeitverlust wieder z.B. an die Auswerteeinrichtung übertragen werden.

Ein Ausgangssignalzweig der weiteren Schalteinheit kann beispielsweise einer Verbindung der weiteren Schalteinheit mit der vorhergehend erläuterten Auswerteeinrichtung oder einer weiteren Auswerteeinrichtung dienen. Auch die Verbindung der weiteren Schalteinheit mit der Auswerteeinrichtung oder einer weiteren Auswerteeinrichtung kann weitere Elemente umfassen, beispielsweise die vorhergehend erläuterte Detektoreinrichtung oder eine weitere Detektoreinrichtung.

Unter dem Ausgangssignalzweig kann auch in diesem Fall ein Ausgangsanschluss oder eine Ausgangsschnittstelle der weiteren Schalteinheit verstanden werden.

Z.B. kann die Schaltungsanordnung eine weitere Auswerteeinrichtung umfassen, wobei mittels der weiteren Auswerteeinrichtung ein aktivierter Eingangssignalzweig überwachbar ist. Die weitere Auswerteeinrichtung kann beispielsweise ebenfalls eine Pegelmesseinrichtung sein oder eine solche umfassen. Die weitere Auswerteeinrichtung kann über den Ausgangssignalzweig der weiteren Schalteinheit mit der weiteren Schalteinheit verbunden sein. Hierbei kann der Ausgangssignalzweig der weiteren Schalteinheit neben der weiteren Auswerteeinrichtung auch mit weiteren Elementen verbunden sein. So ist es möglich, dass ein Signalverzweigungselement im Ausgangssignalzweig der weiteren Schalteinheit vorgesehen ist, wobei ein Eingangsanschluss des Signalverzweigungselement mit dem Ausgangsanschluss der weiteren Schalteinheit verbunden ist, wobei ein erster Ausgangsanschluss des Signalverzweigungselements zur Herstellung der mittels der Kopplungseinrichtung herzustellenden signaltechnischen Verbindung dient und z.B. mit einer Teilzweig-Schalteinheit oder einer Verstärkungseinrichtung verbunden ist, wobei ein weiterer Ausgangsanschluss des Signalverzweigungselements mit der weiteren Auswerteeinrichtung verbunden ist.

Mittels der weiteren Auswerteeinrichtung kann überwacht werden, ob ein Eingangssignalzweig, insbesondere ein bisher aktivierter Eingangssignalzweig, der mittels der weiteren Schalteinheit mit dem Ausgangssignalzweig der weiteren Schalteinheit verbunden ist, (weiterhin) ein aktivierter Eingangssignalzweig ist. Dies kann auch als Überwachung eines Aktivierungszustands des Eingangssignalzweigs bezeichnet werden.

Wird z.B. mittels der weiteren Auswerteeinrichtung detektiert, dass dieser Eingangssignalzweig nicht mehr aktiviert, also deaktiviert, ist, z.B. falls ein Pegel kleiner als ein vorbestimmter Schwellwert ist, so kann eine erneute Detektion eines aktivierten Eingangssignalzweigs mittels der ersten Schalteinheit und der ersten Auswerteeinrichtung initiiert werden. Eine Deaktivierung kann z.B. detektiert werden, falls ein Pegel kleiner als ein vorbestimmter Schwellwert ist, insbesondere für eine vorbestimmte Zeitdauer.

Zur Initiierung einer erneuten Detektion kann die weitere Auswerteeinrichtung z.B. ein entsprechendes Initiierungssignal erzeugen und an die vorhergehend erläuterte Steuereinrichtung der ersten Schalteinheit übertragen. Während dieser erneuten Detektion mittels der ersten Schalteinheit und der ersten Auswerteeinrichtung, die auch als Suchlauf bezeichnet werden kann, kann ein Verbindungszustand der weiteren Schalteinheit erhalten werden. Dies bedeutet, dass der bisher aktivierte Eingangssignalzweig, der mittels der weiteren Schalteinheit mit dem Ausgangssignalzweig der weiteren Schalteinheit verbunden war, weiterhin mit dem Ausgangssignalzweig verbunden bleibt, insbesondere bis ein von diesem Eingangssignalzweig verschiedener aktivierter Eingangssignalzweig detektiert wird. Da bei der vorhergehend beschriebenen Detektion einer Deaktivierung eine Initiierung eines Suchlaufs auch dann erfolgen kann, wenn nur eine Signalpause des auf dem bisher aktivierten Signalzweig anliegenden Signals und keine tatsächliche Deaktivierung vorliegt, ergibt sich durch die Erhaltung des Verbindungszustands in vorteilhafter Weise, dass nach Ablauf der Signalpause das Signal sofort wieder überwacht werden kann, da der immer noch aktivierte Signalzweig weiterhin über die weitere Schalteinheit mit der weiteren Auswerteeinrichtung verbunden ist. Wird mittels der ersten Auswerteeinrichtung ein von dem bisher aktivierten Eingangssignalzweig verschiedener aktivierter Eingangssignalzweig detektiert, so kann die weitere Schalteinheit derart angesteuert werden, dass der Ausgangssignalzweig der weiteren Schalteinheit mit diesem aktuell aktivierten Eingangssignalzweig verbunden wird.

Die weitere Auswerteeinrichtung kann hierbei gleich der ersten Auswerteeinrichtung sein. In diesem Fall kann die erste Auswerteeinrichtung über den Ausgangssignalzweig der weiteren Schalteinheit mit der weiteren Schalteinheit verbunden sein. Insbesondere können die erste und die weitere Auswerteeinrichtung durch eine gemeinsame Auswerteeinrichtung, insbesondere durch einen Mikrocontroller, bereitgestellt werden. Somit können die erste und die weitere Auswerteeinrichtung als baulich getrennte Einrichtungen ausgebildet sein oder von einer gemeinsamen Auswerteeinrichtung bereitgestellt werden.

Somit kann die weitere Schalteinheit auch als Überwachungseinheit bezeichnet werden. Die Verbindung des aktivierten Eingangssignalzweigs mit dem Ausgangssignalzweig kann insbesondere aufrechterhalten werden, bis ein neuer aktivierter Eingangssignalzweig bestimmt wird und ein entsprechendes Steuersignal erzeugt wird.

Somit können die erste und/oder die weitere Schalteinheit in Abhängigkeit von Aktivierungszuständen der Eingangssignalzweige steuerbar sein.

In einer weiteren Ausführungsform wird ein aktivierter Eingangssignalzweig bestimmt, wobei der aktivierte Eingangssignalzweig mit dem Ausgangssignalzweig einer Schalteinheit verbunden wird. Beispielsweise kann die Signalkopplungseinrichtung eine Auswerteeinrichtung umfassen, wobei mittels der Auswerteeinrichtung der aktivierte Eingangssignalzweig detektierbar ist. Die Auswerteeinrichtung kann beispielsweise eine Pegelmesseinrichtung sein. Weiter kann die Signalkopplungseinrichtung eine Steuereinrichtung umfassen, die in Abhängigkeit des detektierten aktivierten Eingangssignalzweigs die Schalteinheit derart steuert, dass der aktivierte Eingangssignalzweig mit dem Ausgangssignalzweig der Schalteinheit verbunden wird.

Beispielsweise kann der aktivierte Eingangssignalzweig in Abhängigkeit von mindestens einer Signaleigenschaft eines auf dem Ausgangssignalzweig der Schalteinheit anliegenden Signals bestimmt werden. Weiter können mittels der ersten Schalteinheit die Eingangssignalzweige zu vorbestimmten Schaltzeitpunkten mit dem Ausgangssignalzweig der ersten Schalteinheit verbindbar sein, insbesondere nachdem eine erneute Detektion eines aktivierten Schaltzweigs initiiert wurde bzw. nach dem eine Deaktivierung des bisher aktivierten Eingangssignalzweigs detektiert wurde. Die erste Schalteinheit kann somit auch als Detektionseinheit oder Scan-Einheit bezeichnet werden. Hierzu kann die erste Schalteinheit, insbesondere das/die Schaltelement(e) der ersten Schalteinheit, entsprechend gesteuert werden, beispielsweise durch eine Steuereinrichtung, die Teil der vorgeschlagenen Schaltungsanordnung sein kann. Weiter können die Schaltzeitpunkte in einem vorbestimmten Schaltmuster festgelegt sein. Vorzugsweise sind mittels der ersten Schalteinheit die Eingangssignalzweige mit einer vorbestimmten Schaltfrequenz mit dem Ausgangssignalzweig der ersten Schalteinheit verbindbar. Die Schaltfrequenz kann beispielsweise im Bereich von 25 kHz (40 µs) liegen. Allerdings ist die Schaltfrequenz je nach Anwendung anpassbar. Somit ist die erste Schalteinheit in Abhängigkeit eines vorbestimmten Schaltmusters steuerbar.

Somit ergibt sich in vorteilhafter Weise, dass die Eingangssignalzweige regelmäßig, insbesondere periodisch, oder zumindest nach einer detektierten Deaktivierung auf ihren jeweiligen Aktivierungszustand hin überprüft werden können. Hierzu kann, wie vorhergehend erläutert, die erste Schalteinheit über den Ausgangssignalzweig der ersten Schalteinheit mit einer Auswerteeinrichtung zur Bestimmung eines aktivierten oder deaktivierten Zustandes verbunden sein.

Der aktivierte Eingangssignalzweig kann in Abhängigkeit von mindestens einer Signaleigenschaft eines auf dem Ausgangssignalzweig der ersten Schalteinheit anliegenden Signals bestimmt werden. Insbesondere kann der aktivierte Eingangssignalzweig in Abhängigkeit von mindestens einer Signaleigenschaft der auf dem Ausgangssignalzweig der ersten Schalteinheit während einer vollständigen Schaltperiode anliegenden Signale bestimmt werden, wobei die vollständige Schaltperiode eine Zeitdauer bezeichnet, in der jeder Eingangssignalzweig mindestens einmal mit dem Ausgangssignalzweig der ersten Schalteinheit verbunden wird. Eine Signaleigenschaft kann beispielsweise einen Signalpegel oder eine Intensität oder eine Leistung des anliegenden Signals bezeichnen. Selbstverständlich können auch weitere Signaleigenschaften gewählt werden.

Insbesondere kann die Bestimmung des aktivierten Eingangssignalzweigs in Abhängigkeit eines Vergleichs zwischen der mindestens einen Signaleigenschaft aller Eingangssignalzweige erfolgen. Somit erfolgt ein Vergleich der Signaleigenschaften relativ zueinander. Beispielsweise kann die mindestens eine Signaleigenschaft für jeden Eingangssignalzweig, insbesondere in der vorhergehend erläuterten Schaltperiode, bestimmt und gespeichert werden. Nach Ablauf der Schaltperiode können dann die derart bestimmten Signaleigenschaften der verschiedenen Eingangssignalzweige verglichen werden. Beispielsweise kann ein aktivierter Eingangssignalzweig als der Eingangssignalzweig mit dem höchsten Signalpegel bestimmt werden.

Selbstverständlich kann ein aktivierter Eingangssignalzweig zusätzlich in Abhängigkeit von mindestens einer absoluten Signaleigenschaft bestimmt werden. Beispielsweise kann ein aktivierter Eingangssignalzweig nur dann detektiert werden, falls der Signalpegel höher als ein vorbestimmter Schwellwert ist, z.B. höher als ein von einem Rauschen abhängiger Schwellwert.

Alternativ oder kumulativ ist ein aktivierter Eingangssignalzweig, insbesondere ein Aktivierungszustand dieses Eingangssignalzweigs, in Abhängigkeit von mindestens einer Signaleigenschaft der auf dem Ausgangssignalzweig der weiteren Schalteinheit anliegenden Signale überwachbar. Dies bedeutet, dass in Abhängigkeit von mindestens einer Signaleigenschaft der auf dem Ausgangssignalzweig der weiteren Schalteinheit anliegenden Signale detektierbar ist, ob der Eingangssignalzweig, der aktuell mit dem Ausgangssignalzweig der weiteren Schalteinheit verbunden ist, ein aktivierter oder deaktivierter Eingangssignalzweig ist. Insbesondere kann entsprechend den Ausführungen zur Bestimmung des aktivierten Eingangssignalzweig in Abhängigkeit von mindestens einer Signaleigenschaft auch die vorhergehend erläuterte Überwachung des Aktivierungszustands in Abhängigkeit von mindestens einer Signaleigenschaft eines auf dem Ausgangssignalzweig der weiteren Schalteinheit anliegenden Signals durchgeführt werden. Insbesondere kann der Aktivierungszustand also abhängig von einer oder mehreren Signaleigenschaft(en), die vorhergehend beispielhaft erläutert wurden, eines auf dem Ausgangssignalzweig der weiteren Schalteinheit anliegenden Signals überwacht werden.

Hierdurch ergibt sich in vorteilhafter Weise eine zuverlässige Detektion eines neu aktivierten Eingangssignalzweigs, wobei gleichzeitig eine Überwachung des bisher aktivierten Signalzweigs gewährleistet wird.

Weiter kann die Schaltungsanordnung eine erste Auswerteeinrichtung umfassen, wobei mittels der ersten Auswerteeinrichtung ein aktivierter Eingangssignalzweig bestimmbar ist. Alternativ oder kumulativ kann die Schaltungsanordnung eine weitere Auswerteeinrichtung umfassen, wobei mittels der weiteren Auswerteeinrichtung ein aktivierter Eingangssignalzweig, insbesondere ein Aktivierungszustand dieses Eingangssignalzweigs, überwachbar ist. Die Bestimmung bzw. Detektion eines aktivierten Eingangssignalzweigs mittels der ersten Auswerteeinrichtung als auch die Überwachung des Aktivierungszustands mittels der weiteren Auswerteeinrichtung wurden hierbei vorhergehend erläutert. Die erste Auswerteeinrichtung kann hierbei auch als Detektionseinrichtung und die weitere Auswerteeinrichtung kann hierbei auch als Überwachungseinrichtung bezeichnet werden. Die erste und die weitere Auswerteeinrichtung wurden vorhergehend bereits erläutert. Hierdurch ergibt sich in vorteilhafter Weise eine Trennung von Detektion und Überwachung.

Weiter können die erste und die weitere Schalteinheit auf einer gemeinsamen Leiterplatte angeordnet sein. Insbesondere können die erste und die weitere Schalteinheit derart in oder auf einer gemeinsamen Leiterplatte relativ zueinander angeordnet sein, dass eine Länge des vorhergehend erläuterten ersten Teilabschnitt und/oder eine Länge des vorhergehend erläuterten weiteren Teilabschnitts eines Eingangssignalzweiges kleiner als eine vorbestimmte Länge, insbesondere kleiner als eine wellenlängenabhängige Länge, ist/sind. Insbesondere kann eine Länge des ersten Teilabschnitts und/oder des weiteren Teilabschnitts kleiner, vorzugsweise sehr viel kleiner, als λ/4 sein, wobei λ die Wellenlängen aus dem Wellenlängenbereich umfasst oder die kleinste Wellenlänge aus diesem Bereich bezeichnet, den das über den jeweiligen Eingangssignalzweig zu übertragende Signal aufweist. Die Länge des gemeinsamen Teilabschnitts kann hierbei beliebig gewählt werden. Beträgt die Länge eines Teilabschnitts λ/4, so kann eine Transformation einer Impedanz, die am Ende des Teilabschnitts angeschlossen ist, erfolgen. So ist es z.B. möglich, dass ein Leerlauf am Ende eines Teilabschnitts in einen Kurzschluss am Verzweigungspunkt transformiert wird. Hierdurch kann in unerwünschter Weise eine signaltechnische Trennung des Eingangssignals von den Schalteinheiten erfolgen.

In der vorgeschlagenen Ausführungsform kann somit in vorteilhafter Weise ein schaltungstechnischer Kurzschluss in der erfindungsgemäß herzustellenden Verbindung vermieden werden, der entstehen kann, wenn in einem aktivierten Eingangssignalzweig der weitere Teilabschnitt über die weitere Schalteinheit mit dem Ausgangssignalzweig der weiteren Schalteinheit verbunden ist, der erste Teilabschnitt jedoch nicht mit dem Ausgangssignalzweig der ersten Schalteinheit verbunden ist, insbesondere offen liegt oder mit einem Referenzpotential der ersten Schalteinheit, insbesondere einem Massepotential der ersten Schalteinheit, verbunden ist. In diesem Fall kann der erste Teilabschnitt einen sogenannten "open stub" bilden, also eine offene Stichleitung. Diese kann aber, insbesondere wenn die Länge λ/4 beträgt, den Leerlauf, wie vorhergehend erläutert, in einen Kurzschluss transformieren. Weiter ergibt sich durch die Anordnung auf einer gemeinsamen Leiterplatte in vorteilhafter Weise eine kompakte bauliche Ausführung der vorgeschlagenen Schaltungsanordnung.

Weiter können die erste Schalteinheit und die weitere Schalteinheit auf gegenüberliegenden Oberflächen der Leiterplatte angeordnet sein. Beispielsweise kann die erste Schalteinheit auf einer Oberseite der Leiterplatte und die weitere Schalteinheit auf einer Unterseite der Leiterplatte oder umgekehrt angeordnet sein. In diesem Fall können die Eingangssignalzweige und/oder die Ausgangssignalzweige jeweils auf einer Oberfläche der Leiterplatte oder innerhalb der Leiterplatte verlaufen. Hierdurch ergibt sich in vorteilhafter Weise eine noch kompaktere bauliche Ausbildung der Schaltungsanordnung. Bevorzugt können die Schalteinheiten relativ zur Leiterplatte, insbesondere einer Symmetrieebene der Leiterplatte, spiegelbildlich angeordnet sein. Die Symmetrieebene kann hierbei parallel zu den vorhergehend erläuterten Leiterplattenoberflächen orientiert sein. Insbesondere können in diesem Fall auch die vorhergehend erläuterten Ausgangssignalzweige und/oder Schaltelemente der Schalteinheiten, insbesondere korrespondierende Schaltelemente, spiegelbildlich angeordnet sein. Spiegelbildlich kann hierbei bedeuten, dass die Schalteinheiten, insbesondere auch Schaltelemente der Schalteinheiten, in einer gemeinsamen Projektionsebene, die parallel zu einer der Leiterplattenoberflächen orientiert sein kann, an derselben Position und/oder mit derselben Orientierung angeordnet sind. So kann z.B. ein Schaltelement der ersten Schalteinheit in einer Richtung senkrecht zur Oberfläche der Leiterplatte genau über einem, insbesondere korrespondierenden, Schaltelement der weiteren Schalteinheit angeordnet sein. Hierdurch ergibt sich in vorteilhafter Weise eine weiter kompakte Bauform, insbesondere aufgrund der somit ermöglichten kurzen signaltechnischen Verbindungswege.

Weiter kann ein Eingangsanschluss einer Schalteinheit, also der ersten oder der weiteren Schalteinheit, mit einem Ausgangsanschluss der Schalteinheit über ein PIN-Dioden-Schaltelement verbindbar sein. Ein PIN-Dioden-Schaltelement bezeichnet hierbei ein gleichstromgesteuertes Hochfrequenz-Widerstandselement. Insbesondere stellt das PIN-Dioden-Schaltelement ein gleichstromgesteuertes Ein-Aus-Schaltelement bereit. Hierbei kann über einen einstellbaren Gleichstromfluss über das PIN-Dioden-Schaltelement ein Hochfrequenzwiderstand des PIN-Dioden-Schaltelements eingestellt werden.

Hierdurch ergibt sich in vorteilhafter Weise eine einfach bereitzustellende Schaltfunktion (Ein-Aus-Schaltfunktion). Weiterhin kann hierdurch eine Verwendung von Schaltelementen vermieden werden, die deaktivierte Eingangssignalzweige auf ein Massepotential schalten. Weiterhin stellen PIN-Dioden-Schaltelemente eine preisgünstige Lösung dar.

In einer weiteren Ausführungsform wird die endgeräteseitige Schnittstelle mit einem ausgewählten Teilzweig aus einer Gruppe von mindestens zwei Teilzweigen verbunden, wobei die endgeräteseitige Schnittstelle über jeden der Teilzweige aus der Gruppe von mindestens zwei Teilzweigen mit einer antennenseitigen Schnittstelle verbindbar ist. Über den ausgewählten Teilzweig kann die endgeräteseitige Schnittstelle mit der antennenseitigen Schnittstelle verbunden sein. Beispielsweise kann eine Teilzweig-Schalteinheit mit der endgeräteseitigen Schnittstelle verbunden sein. Die Teilzweig-Schalteinheit kann hierbei gemäß einem oder mehrerer der in dieser Offenbarung diesbezüglich beschriebenen Aspekte ausgebildet sein.

Mittels der Teilzweig-Schalteinheit kann ein mit der endgeräteseitigen Schnittstelle verbundener Eingangsanschluss der Teilzweig-Schalteinheit mit einem ausgewählten Ausgangsanschluss aus einer Gruppe von Ausgangsanschlüssen verbunden werden, wobei jeder Ausgangsanschluss mit einem Teilzweig verbunden ist. Die Teilzweig-Schalteinheit kann über die Teilzweige mit Eingangsanschlüssen einer Antennen-Schalteinheit verbunden sein, wobei ein Ausgangsanschluss der Antennen-Schalteinheit mit der antennenseitigen Schnittstelle verbunden ist. Die Antennen-Schalteinheit kann einen ausgewählten Eingangsanschluss der Gruppe von mindestens zwei Eingangsanschlüssen mit dem Ausgangsanschluss der Antennen-Schalteinheit verbinden. Die Verbindung von endgeräteseitiger Schnittstelle, der Teilzweig-Schalteinheit und der antennenseitigen Schnittstelle kann selbstverständlich weitere Elemente, z.B. Kopplereinrichtungen, Filtereinrichtungen und Verstärkereinrichtungen, umfassen.

Verschiedene Teilzweige können zur Übertragung von Signalen, insbesondere Sendesignalen, gemäß verschiedener Standards, beispielsweise gemäß eines GSM-Standards, eines UMTS-Standards oder eines LTE-Standards dienen. Diese Standards wurden vorhergehend erläutert. Weiter können Zeitduplex-Signale oder Frequenzduplex-Signale übertragen werden. Somit können auch die Teilzweige zur Übertragung von Signalen, insbesondere Sendesignalen, mit verschiedenen Frequenzbereichen (Frequenzbändern) dienen. Somit können die einzelnen Teilzweige sich voneinander zumindest insoweit unterscheiden, als dass sie zur Übertragung von Signalen in unterschiedlichen Frequenzbereichen ausgebildet sind. Z.B. kann zwischen der endgeräteseitigen Schnittstelle und der Teilzweig-Schalteinheit mindestens ein Filterelement angeordnet sein, wobei mittels des mindestens einen Filterelements das an der Schnittstelle empfangene Signal, insbesondere das Sendesignal des Endgeräts, in verschiedene Frequenzbereiche aufteilbar ist, wobei diese Anteile dann über die verschiedenen Teilzweige übertragen werden. Das Filterelement kann somit ein bandspezifisches Filterelement sein. Auch ist es möglich, dass in jedem Teilzweig ein bandspezifisches Filterelement angeordnet ist.

Weiter wird der mindestens eine Signalzweigabschnitt, insbesondere der vorhergehend erläuterte Detektions-Signalzweigabschnitt, mit dem ausgewählten Teilzweig verbunden. Mit anderen Worten wird der Detektions-Signalzweigabschnitt mit dem Teilzweig verbunden, über den zum aktuellen Zeitpunkt die endgeräteseitige Schnittstelle mit der antennenseitigen Schnittstelle verbunden ist. Liegt auf diesem Teilzweig ein Signal, insbesondere ein Sendesignal an, so liegt zumindest ein Teil des Signals auch an dem Detektions-Signalzweigabschnitt an. Insbesondere kann der Detektions-Signalzweigabschnitt mit dem ausgewählten Teilzweig signaltechnisch gekoppelt werden. Hierbei kann eine signaltechnische Kopplung bedeuten, dass keine galvanische Verbindung zwischen dem Signalzweigabschnitt und dem Teilzweig vorliegt. Allerdings kann durch die Kopplung ein Teil des Signals aus dem entsprechenden Teilzweig ausgekoppelt und zum Signalzweigabschnitt übertragen werden.

Weiter kann ein Aktivierungszustand der Teilzweige bestimmt werden, wobei dann der detektierte aktivierte Teilzweig mit dem Detektions-Signalzweigabschnitt verbunden wird. In diesem Fall ist der aktivierte Teilzweig der ausgewählte Teilzweig. Ein aktivierter Teilzweig bezeichnet einen mit einem Signal, insbesondere einem Sendesignal, beaufschlagten Teilzweig. Entsprechend bezeichnet ein deaktivierter Teilzweig einen nicht mit einem Signal beaufschlagten Teilzweig. Dies wurde vorhergehend mit Bezug auf die Eingangssignalzweige bereits erläutert. Da die Teilzweige, wie vorhergehend erläutert, frequenz(bereichs)spezifische Teilzweige sind, kann in Abhängigkeit des Aktivierungszustandes auch bestimmt werden, in welchem Frequenzbereich Signale vom Endgerät gesendet und/oder empfangen werden. Dies wiederum ermöglicht die vorhergehend erläuterte Bestimmung des Standards der Kommunikation.

Der mit dem Teilzweig verbundene Detektions-Signalzweigabschnitt kann mit einer, insbesondere mit der bereits erläuterten, Auswerteeinrichtung verbunden sein, beispielsweise über eine Detektoreinrichtung, beispielsweise die vorhergehend erläuterte Detektoreinrichtung. Mittels der Auswerteeinrichtung kann der aktivierte Teilzweig detektierbar sein. Weiter kann die Schaltungsanordnung eine Steuereinrichtung umfassen, die die Teilzweig-Schalteinheit, insbesondere mindestens ein Schaltelement der Schalteinheit, derart steuert, dass ein ausgewählter, insbesondere aktivierter, Teilzweig mit dem Detektions-Signalzweigabschnitt verbunden wird. Die Auswerteeinrichtung und/oder die Steuereinrichtung und/oder die Detektoreinrichtung kann/können hierbei gemäß einem oder mehrerer der in dieser Offenbarung diesbezüglich beschriebenen Aspekte ausgebildet sein.

Zur Detektion eines aktivierten Teilzweigs kann die endgeräteseitige Schnittstelle in aufeinander folgenden Zeitabschnitten, z.B. periodisch, über jeweils verschiedene Teilzweige mit der antennenseitigen Schnittstelle verbunden werden. Dies kann insbesondere dann erfolgen, wenn zu einem aktuellen Zeitpunkt kein aktivierter Teilzweig detektiert wird. In diesem Fall kann eine Detektion initiiert werden. Hierbei kann nacheinander jeder Teilzweig signaltechnisch mit dem Detektions-Signalzweigabschnitt verbunden werden. Weiter kann detektiert werden, ob der mit dem Detektions-Signalzweigabschnitt aktuell verbundene oder gekoppelte Teilzweig ein aktivierter Teilzweig ist. Die Detektion eines aktivierten Teilzweigs kann beispielsweise dann (erneut) beginnen, falls auf einem aktuell mit dem Detektions-Signalzweigabschnitt verbundenen Teilzweig kein beaufschlagtes Signal mehr detektierbar ist, insbesondere für eine vorbestimmte Zeitdauer. Wird ein aktivierter Teilzweig detektiert, so kann die Detektion des aktivierten Teilzweigs beendet werden und der aktivierte Teilzweig mit dem Detektions-Signalzweigabschnitt verbunden werden. Selbstverständlich sind auch andere Ausführungsformen der Detektion, der Initiierung und der Beendigung der Detektion vorstellbar.

In einer weiteren Ausführungsform wird mittels einer Einrichtung zur Detektion eines Sendesignals ein von der endgeräteseitigen Schnittstelle, insbesondere an eine antennenseitige Schnittstelle, übertragenes Sendesignal detektiert. Insbesondere kann mittels der Einrichtung zur Detektion eines Sendesignals ein von der endgeräteseitigen Schnittstelle an die Teilzweig-Schalteinheit übertragenes Signal detektiert werden. Diese Detektion kann von der Detektion eines aktivierten Teilzweigs verschieden sein.

Beispielsweise kann eine Auswerteeinrichtung, insbesondere die vorhergehend erläuterte Auswerteeinrichtung, mit einem Signalzweigabschnitt zwischen der endgeräteseitigen Schnittstelle und der Teilzweig-Schalteinheit verbunden, vorzugsweise gekoppelt, werden. Diese Verbindung kann über eine weitere Detektoreinrichtung erfolgen. Auch kann die Verbindung über Filterelemente erfolgen, mittels derer Frequenzbereiche filterbar sind, die zur Übertragung von Signalanteilen des Sendesignals gemäß der zu übertragenden Standards dienen. Die Auswerteeinrichtung und/oder die Detektoreinrichtung kann/können hierbei gemäß einem oder mehrerer der in dieser Offenbarung diesbezüglich beschriebenen Aspekte ausgebildet sein. Mittels der Auswerteeinrichtung kann dann detektiert werden, ob gemäß einer dieser Standards ein Signal übertragen wird. Dies kann beispielsweise detektiert werden, wenn ein Signalpegel in mindestens einem der Frequenzbereiche größer als ein vorbestimmter Schwellwert ist. Wird ein solches (Sende-)Signal detektiert, so kann die vorhergehend erläuterte Detektion des aktivierten Teilzweigs initiiert bzw. durchgeführt werden. Wird kein solches (Sende-)Signal (mehr) detektiert, so kann die vorhergehend erläuterte Detektion des aktivierten Teilzweigs beendet werden.

Weiter vorgeschlagen wird eine Signalkopplungseinrichtung, wobei die Signalkopplungseinrichtung mindestens einen Signalzweigabschnitt umfasst, der signaltechnisch mit einer endgeräteseitigen Schnittstelle verbunden ist oder verbunden werden kann.

Weiter umfasst die Signalkopplungseinrichtung weiter mindestens eine Auswerteeinrichtung, die auch als Steuer- und Auswerteeinrichtung bezeichnet werden kann. Mittels der Auswerteeinrichtung ist mindestens eine Signaleigenschaft eines auf dem mindestens einen Signalzweigabschnitt anliegenden Signals bestimmbar. Weiter ist in Abhängigkeit der mindestens einen Signaleigenschaft eine Signalart bestimmbar, wobei als Signalart ein Zeitduplex-Signal oder ein Frequenzduplex-Signal bestimmbar ist. Weiter kann eine signalartspezifische Verbindung zwischen der endgeräteseitigen Schnittstelle und einer antennenseitigen Schnittstelle herstellbar sein, z.B. mittels der Steuer- und Auswerteeinrichtung. Weiter ist in Abhängigkeit der Signalart ein signalartspezifischer Betrieb mindestens einer Signalverarbeitungseinrichtung der Signalkopplungseinrichtung einstellbar, z.B. mittels der Steuer- und Auswerteeinrichtung. Eine Steuer- und Auswerteeinrichtung kann als Mikrocontroller ausgebildet sein.

Die Signalkopplungseinrichtung kann beispielsweise eine Antennenschalteinheit umfassen, über die ein Teilzweig aus einer Gruppe von mehreren Teilzweigen mit der endgeräteexternen Antenne verbindbar ist. Selbstverständlich kann die Signalkopplungseinrichtung noch eine weitere oder mehrere weitere Schalteinheiten umfassen, mittels derer ein gewünschter Signalpfad zwischen der endgeräteseitigen Schnittstelle und der antennenseitigen Schnittstelle herstellbar ist. Beispielsweise kann also in Abhängigkeit der Signalart die Antennenschalteinheit und/oder mindestens eine weitere Schalteinheit, beispielsweise einer Teilzweig-Schalteinheit, derart gesteuert werden, dass eine gewünschte signalartspezifische Verbindung zwischen der endgeräteseitigen Schnittstelle und der antennenseitigen Schnittstelle hergestellt wird.

Weiter kann, insbesondere falls als Signalart ein Zeitduplex-Signal bestimmt wird, mittels der Auswerteeinrichtung eine gewünschte Steuerung, insbesondere eine Aktivierung und Deaktivierung, der mindestens einen Signalverarbeitungseinrichtung erfolgen.

Erfindungsgemäß ist ein zukünftiger Signalverlauf des anliegenden Signals schätzbar, wobei die signalartspezifische Steuerung der mindestens einen

Signalverarbeitungseinrichtung in Abhängigkeit des geschätzten zeitlichen Verlaufs erfolgt. Die Signalverarbeitungseinrichtung kann hierbei ebenfalls Teil der Signalkopplungseinrichtung sein.

Mittels der vorbeschlagenen Signalkopplungseinrichtung ist hierbei in vorteilhafter Weise ein Verfahren gemäß einer der vorhergehend erläuterten Ausführungsformen durchführbar. Insbesondere kann die Signalkopplungseinrichtung also derart ausgebildet sein, dass ein Verfahren gemäß einer der vorhergehend erläuterten Ausführungsformen mit der Signalkopplungseinrichtung durchführbar ist.

Die Erfindung wird anhand eines Ausführungsbeispiels näher erläutert. Die Figuren zeigen:
- Fig. 1: ein schematisches Schaltbild einer erfindungsgemäßen Signalkopplungsvorrichtung,
- Fig. 2: ein schematisches Schaltbild einer weiteren erfindungsgemäßen Signalkopplungsvorrichtung,
- Fig. 3: ein schematisches Schaltbild einer weiteren erfindungsgemäßen Signalkopplungsvorrichtung und
- Fig. 4: ein schematisches Schaltbild einer erfindungsgemäßen Signalkopplungsvorrichtung in einer weiteren Ausführungsform.

Nachfolgend bezeichnen gleiche Bezugszeichen Elemente mit gleichen oder ähnlichen technischen Merkmalen.

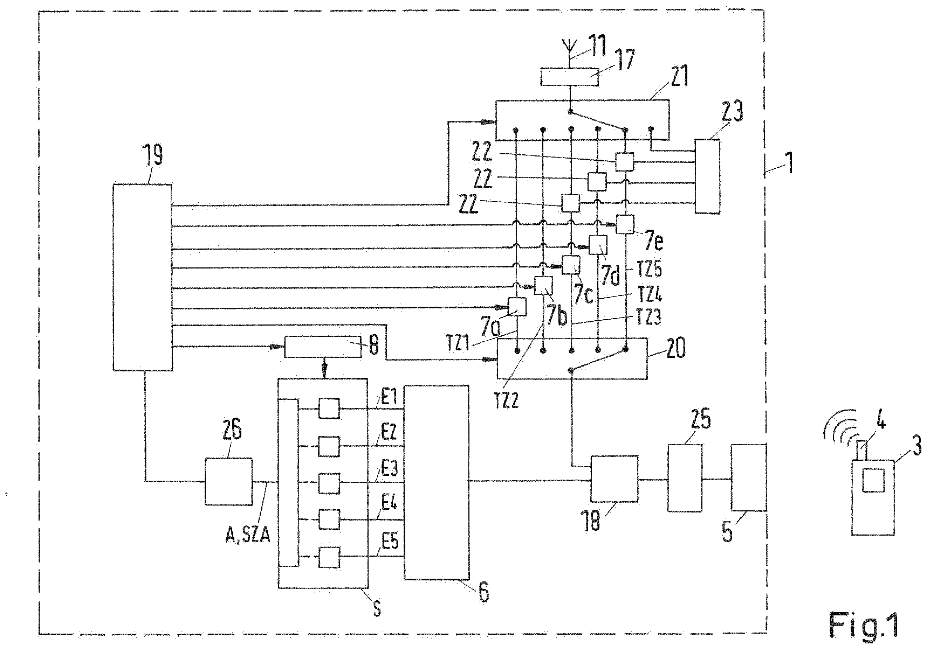

In Fig. 1 ist ein schematisches Schaltbild einer erfindungsgemäßen Signalkopplungsvorrichtung 1 dargestellt. Die Signalkopplungsvorrichtung 1 dient zur signaltechnischen Kopplung eines Endgerätes 3, insbesondere eines Mobilfunktelefons, mit einer externen Antenne 11, beispielsweise einer Fahrzeugantenne. Die Signalkopplungsvorrichtung 1 kann in einem Fahrzeug angeordnet sein. In Fig. 1 ist hierbei jedoch detaillierter der Teil der Signalkopplungseinrichtung 1 dargestellt, der einer Übertragung von Sendesignalen 4 des Endgerätes 3 an die Antenne 11 dient. Nur schematisch dargestellt ist ein Empfangsabschnitt 23 der Signalkopplungseinrichtung 1, der zur Übertragung von Signalen, die von der Antenne 11 empfangen werden, an das Endgerät 3 dient.

Die Signalkopplungseinrichtung 1 umfasst eine endgeräteseitige Signalschnittstelle 5 zum Empfang der Sendesignale 4 des Endgerätes 3. Die Signalschnittstelle 5 kann selbstverständlich auch derart ausgebildet sein, dass über die Signalschnittstelle 5 Signale von der Signalkopplungseinrichtung 1 an das Endgerät 3 gesendet werden können.

Die Signalschnittstelle 5 ist mit einer Filtereinrichtung 25 verbunden. Diese Filtereinrichtung 25 kann beispielsweise einen oder mehrere Duplexfilter umfassen, die zum Übertragen von Signalen von der endgeräteseitigen Schnittstelle 5 zur Antenne 11 und von der Antenne 11 zur endgeräteseitigen Schnittstelle 5 dienen. Die Filtereinrichtung 25 kann hierzu mit dem Empfangsabschnitt 23 verbunden sein (nicht dargestellt).

Die Filtereinrichtung 25 ist mit einem Signalverzweigungselement 18 verbunden, welches auch als Splitter bezeichnet werden kann. Ein erster Ausgang des Signalverzweigungselements 18 ist mit einer Teilzweig-Schalteinheit 20 verbunden. Ein weiterer Ausgang des Signalverzweigungselements 18 ist mit einem Filterelement 6 verbunden, welches das empfangene Sendesignal 4 des Endgeräts 3 in Anteile mit verschiedenen Frequenzbereichen filtert.

Die Signalkopplungseinrichtung 1 umfasst weiter fünf Eingangssignalzweige E1, E2, E3, E4, E5, wobei jeder Eingangssignalzweig E1, ..., E5 zur Übertragung jeweils eines durch das Filterelement 6 gefilterten Anteils des empfangenen Sendesignals 4 dient. Selbstverständlich können auch mehr oder weniger als fünf Eingangssignalzweige vorhanden sein. Somit werden über die Eingangssignalzweige E1, ..., E5 Signale mit verschiedenen Frequenzbereichen übertragen.

Weiter umfasst die Schaltungsanordnung 1 eine Schalteinheit S, wobei die Schalteinheit S einen Ausgangssignalzweig A aufweist. Der Ausgangssignalzweig A bildet hierbei einen Signalzweigabschnitt SZA, der mit der Signalschnittstelle 5, die eine endgeräteseitige Schnittstelle bildet, verbunden ist, insbesondere über die Schalteinheit S, einen der Eingangssignalzweige E1, ..., E5, das Filterelement 6, das Signalverzweigungselement 18 und die Filtereinrichtung 25.

Mittels der Schalteinheit S ist jeder der Eingangssignalzweige E1, ..., E5 mit dem Ausgangssignalzweig A verbindbar, wobei jedoch zu einem Zeitpunkt nur ein ausgewählter Eingangssignalzweig E1, ..., E5 mit dem Ausgangssignalzweig A verbindbar ist. Zur Verbindung der Eingangssignalzweige E1, ..., E5 mit dem Ausgangssignalzweig A weist die Schalteinheit S z.B. fünf Schaltelemente auf.

So ist z.B. mittels des ersten Schaltelementes des Schaltelements S ein erster Eingangssignalzweig E1 mit dem Ausgangssignalzweig A des Schaltelements S verbindbar. In Fig. 1 ist durch eine durchgezogene Linie dargestellt, dass der erste Eingangssignalzweig E1 mittels des ersten Schaltelements der Schalteinheit S mit dem Ausgangssignalzweig A verbunden ist.

Weiter ist dargestellt, dass die Schalteinheit S über den Ausgangssignalzweig A und eine Detektoreinrichtung 26 mit einer Steuer- und Auswerteeinrichtung 19 verbunden ist. Die Detektoreinrichtung 26 erzeugt ein von einem Signalpegel eines auf dem Ausgangssignalzweig A anliegenden Signals abhängiges Ausgangssignal. Insbesondere kann das Ausgangssignal der Detektoreinrichtung 26 ein analoges (Spannungs-)Signal sein, dessen Amplitude proportional zu dem Signalpegel ist.

Weiter dargestellt ist eine erste Steuereinrichtung 8, durch die die Schalteinheit S, insbesondere Schaltelemente der Schalteinheit S, steuerbar ist. Die Steuereinrichtung 8 ist signaltechnisch mit der Steuer- und Auswerteeinrichtung 19 verbunden. Somit kann auch die Steuer- und Auswerteeinrichtung 19 über die Steuereinrichtung 8 die Schalteinheit S steuern.

Die Teilzweig-Schalteinheit 20 weist eine vorbestimmte Anzahl von Ausgangsanschlüssen auf, wobei die Anzahl der Ausgangsanschlüsse gleich der Anzahl an Eingangssignalzweigen E1, ..., E5 sein kann, aber nicht sein muss. Über die Teilzweig-Schalteinheit 20, die von der Steuer- und Auswerteeinrichtung 19 steuerbar ist, kann der erste Ausgang der Signalverzweigungseinrichtung 18 mit einem ausgewählten Ausgangsanschluss der Teilzweig-Schalteinheit 20 signaltechnisch verbunden werden. An jeden Ausgangsanschluss ist jeweils ein Teilzweig TZ1, TZ2, TZ3, TZ4, TZ5 angeschlossen. Ein erster und ein zweiter Teilzweig TZ1, TZ2 dienen zur Übertragung von Zeitduplex-Signalen, beispielsweise von Signalen gemäß einem GSM-Standard. Ein dritter, ein vierter und ein fünfter Teilzweig TZ3, TZ4, TZ5 dienen zur Übertragung von Frequenzduplex-Signalen, beispielsweise von Signalen gemäß einem UMTS- oder einem LTE-Standard.

In jedem Teilzweig TZ1,...,TZ5 ist eine Verstärkereinrichtung 7a, 7b, 7c, 7d, 7e angeordnet. Mittels einer ersten Verstärkereinrichtung 7a kann das auf dem ersten Teilzweig TZ1 anliegende Signal verstärkt werden. Entsprechend kann mittels einer der weiteren Verstärkereinrichtungen 7b,...,7e jeweils das auf einem weiteren Teilzweig TZ2,..., TZ5 anliegenden Signal verstärkt werden. Die Verstärkereinrichtungen 7a, ..., 7e sind hierbei derart ausgebildet, dass mittels einer Verstärkereinrichtung 7a,...,7e jeweils ein Signalanteil mit einem bestimmten Frequenzbereich verstärkt wird, wobei die den einzelnen Verstärkereinrichtungen 7a,...,7e zugeordneten Frequenzbereiche voneinander verschieden sind. Insbesondere können die Frequenzbereiche, die den jeweiligen Verstärkereinrichtungen 7a,...,7e zugeordnet sind, den Frequenzbereichen der Signale entsprechen, die über den korrespondierenden Eingangssignalzweig E1,..., E5 übertragen werden. So kann z.B. der Frequenzbereich, der der ersten Verstärkereinrichtung 7a zugeordnet ist, dem Frequenzbereich des Signals entsprechen, das über den ersten Eingangssignalzweig E1 übertragen wird.

Die Teilzweig-Schalteinheit 20 ist über die Teilzweige TZ1, ..., TZ5 mit einer Antennen-Schalteinheit 21 verbunden. Die Antennen-Schalteinheit 21 weist hierbei jeweils einen Eingangsanschluss für jeden der Teilzweige TZ1, ..., TZ5 auf. Die Teilzweig-Schalteinheit 20 kann jedoch auch mehr Anschlüsse als die Anzahl von Teilzweigen TZ1, ..., TZ5 aufweisen. Ein Ausgangsanschluss der Antennen-Schalteinheit 21 ist über die antennenseitige Schnittstelle 17 mit der Antenne 11 signaltechnisch verbunden. Durch die Antennen-Schalteinheit 21 kann genau einer der Eingangsanschlüsse mit dem Ausgangsanschluss verbunden werden.

Hierbei sind in den Teilzweigen TZ3,..., TZ5, die zur Übertragung von Frequenzduplex-Signalen dienen, jeweils Duplex-Filter 22 angeordnet. Über die Duplex-Filter 22 und den Empfangsabschnitt 23 wird ein von der Antenne 11 empfangenes Signal an das Endgerät 3 übertragen. Ein Signal, welches vom Endgerät 3 über die Teilzweig-Schalteinheit 20 und die Antennenschalteinheit 21 an die Antenne 11 übertragen werden soll, wird somit über den jeweiligen Duplex-Filter 22 übertragen. Weiter weist die Antennen-Schalteinheit 21 einen Ausgangsanschluss auf, an den der Empfangsabschnitt 23 angeschlossen ist.

Die Verstärkereinrichtungen 7a,..., 7e und die Antennenschalteinheit 21 sind von der Steuer- und Auswerteeinrichtung 19 steuerbar.

Die Steuer- und Auswerteeinrichtung 19 wertet einen zeitlichen Verlauf eines Signalpegels des auf dem Ausgangssignalzweig A anliegenden Signals aus und bestimmt, ob ein Zeitduplex-Signal oder ein Frequenzduplex-Signal vorliegt. In Abhängigkeit der Signalart werden dann die Teilzweig-Schalteinheit 20 und die Antennen-Schalteinheit 21 gesteuert. Weiter kann ein Standard einer über das auf dem Ausgangssignalzweig A anliegenden Signals erfolgenden Kommunikation bestimmt werden.

Somit wird mittels der Steuer- und Auswerteeinrichtung 19 eine signalartspezifische Verbindung zwischen der endgeräteseitigen Schnittstelle 5 und der antennenseitigen Schnittstelle 17 hergestellt. Wird z.B. ein Zeitduplex-Signal mit einem ersten Zeitduplex-Standard, z.B. GSM1800 oder GSM1900, detektiert, so kann über die Teilzweig-Schalteinheit 20 der erste Ausgang der Signalverzweigungseinrichtung 18 mit dem ersten Teilzweig TZ1 verbunden werden. Wird z.B. ein Zeitduplex-Signal mit einem weiteren Zeitduplex-Standard, z.B. GSM850 oder GSM900, detektiert, so kann über die Teilzweig-Schalteinheit 20 der erste Ausgang der Signalverzweigungseinrichtung 18 mit dem zweiten Teilzweig TZ2 verbunden werden.

Wird z.B. ein Frequenzduplex-Signal mit einem ersten Frequenzduplex-Standard, z.B. UMTS2100 (UMTS Band 1), detektiert, so kann über die Teilzweig-Schalteinheit 20 der erste Ausgang der Signalverzweigungseinrichtung 18 mit dem dritten Teilzweig TZ3 verbunden werden. Wird z.B. ein Frequenzduplex-Signal mit einem zweiten Frequenzduplex-Standard, z.B. LTE800 (LTE-Band 20), detektiert, so kann über die Teilzweig-Schalteinheit 20 der erste Ausgang der Signalverzweigungseinrichtung 18 mit dem vierten Teilzweig TZ4 verbunden werden. Wird z.B. ein Frequenzduplex-Signal mit einem weiteren Frequenzduplex-Standard, z.B. LTE2600 (LTE-Band 7), detektiert, so kann über die Teilzweig-Schalteinheit 20 der erste Ausgang der Signalverzweigungseinrichtung 18 mit dem fünften Teilzweig TZ5 verbunden werden. Selbstverständlich können auch Signale gemäß dem UMTS-Standard über weitere Bänder, z.B. aber nicht ausschließlich die Bänder 1, 3 oder 8, übertragen werden. Selbstverständlich können auch Signale gemäß dem LTE-Standard über weitere Bänder, z.B. aber nicht ausschließlich die Bänder 3, 7 oder 20, übertragen werden. Bänder bezeichnen hierbei vorbestimmte Frequenzbereiche, die für die jeweiligen Signalübertragungs-Standards festgelegt sind.

Entsprechend kann die Steuer- und Auswerteeinrichtung 19 die Antennen-Schalteinheit 21 derart ansteuern, dass der entsprechende Teilzweig TZ1,..., TZ5 mit der antennenseitigen Schnittstelle 17 verbunden wird.

Wird ein Zeitduplex-Signal von dem Endgerät 3 gesendet, so sind die Teilzweig-Schalteinheit 20 und die Antennen-Schalteinheit 21 derart anzusteuern, dass während eines Sendezeitschlitzes der entsprechende Teilzweig TZ1, TZ2, über den das Zeitduplex-Signal übertragen wird, mit der Antenne 11 verbunden wird. Weiter ist die Antennen-Schalteinheit 21 derart anzusteuern, dass der Empfangsabschnitt 23 während eines Empfangszeitschlitzes mit der Antenne 11 verbunden wird.

Weiter kann, je nach Signalart und dem entsprechenden Teilzweig TZ1,..., TZ5, über den das Signal übertragen wird, durch die Steuer- und Auswerteeinrichtung 19 die dem jeweiligen Teilzweig TZ1,..., TZ5 zugeordnete Verstärkereinrichtung 7a,...,7e aktiviert und deaktiviert werden.

Weiter kann mittels der Steuer- und Auswerteeinrichtung 19 ein zukünftiger Signalverlauf des auf dem Ausgangssignalzweig A anliegenden Signals geschätzt werden. Dies kann in Abhängigkeit von vorbekannten Eigenschaften des Standards der Kommunikation erfolgen. Die Schätzung des zukünftigen Signalverlaufs kann insbesondere erfolgen, falls ein Zeitduplex-Signal auf dem Ausgangssignalzweig A anliegt. Insbesondere kann ein Anfangszeitpunkt des zeitlich nächstfolgenden Sendezeitabschnitts und ein Endzeitpunkt dieses Sendezeitabschnitts bestimmt werden.

Weiter kann durch die Steuer- und Auswerteeinrichtung 19 in Abhängigkeit des zukünftigen Signalverlaufs die entsprechende Verstärkereinrichtung 7a, 7b gesteuert werden. Z.B. kann die Verstärkereinrichtung 7a, 7b zeitlich vor dem Anfangszeitpunkt aktiviert werden. Zeitlich nach dem Endzeitpunkt kann die Verstärkereinrichtung 7a, 7b dann wieder deaktiviert werden. Vor einem Anfangszeitpunkt des danach zeitlich nächstfolgenden Sendezeitabschnitts kann dann wieder die Verstärkereinrichtung 7a, 7b aktiviert werden.

Weiter kann durch die Steuer- und Auswerteeinrichtung 19 in Abhängigkeit des zukünftigen Signalverlaufs die Teilzweig-Schalteinheit 20 und/oder die Antennen-Schalteinheit 21 gesteuert werden. Beispielsweise kann die Antennen-Schalteinheit 21 zum Anfangszeitpunkt derart gesteuert werden, dass der Teilzweig TZ1, TZ2, über den das Zeitduplex-Signal übertragen wird, mit der antennenseitigen Schnittstelle 17 verbunden wird.

Liegt ein Frequenzduplex-Signal auf dem Ausgangssignalzweig an, so kann die Antennen-Schalteinheit 21 derart gesteuert werden, dass der entsprechende Teilzweig TZ3, TZ4, TZ5 dauerhaft mit der antennenseitigen Schnittstelle 17 verbunden ist.

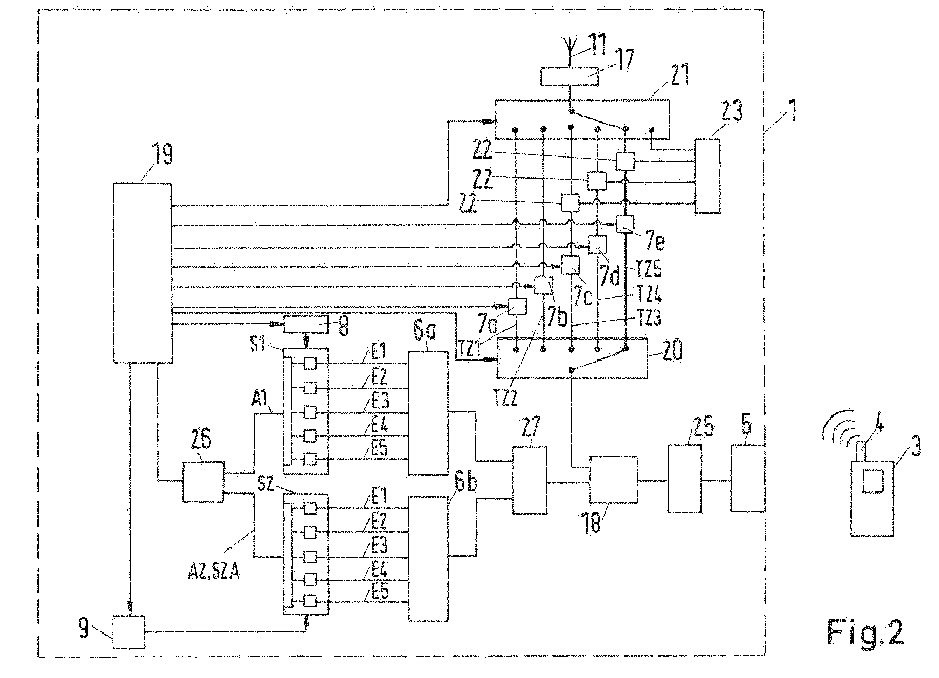

In Fig. 2 ist ein schematisches Schaltbild einer erfindungsgemäßen Signalkopplungseinrichtung 1 in einer weiteren Ausführungsform dargestellt.

Im Unterschied zu der in Fig. 1 dargestellten Signalkopplungseinrichtung 1 umfasst die Signalkopplungseinrichtung 1 eine erste Schalteinheit S1 und eine weitere Schalteinheit S2. Weiter umfasst die Signalkopplungseinrichtung 1 einen Ausgangssignalzweig A1 der ersten Schalteinheit S1 und einen Ausgangsschaltzweig A2 der weiteren Schalteinheit S2. Der Ausgangssignalzweig A2 der weiteren Schalteinheit S2 bildet hierbei einen Signalzweigabschnitt SZA eines Signalzweigs, auf dem das hinsichtlich mindestens einer Signaleigenschaft zu analysierende Signal anliegt.

Im Gegensatz zu der in Fig. 1 dargestellten Signalkopplungseinrichtung 1 umfasst die in Fig. 2 dargestellte Signalkopplungseinrichtung 1 eine weitere Signalverzweigungseinrichtung 27, deren Eingang mit dem weiteren Ausgang der (ersten) Signalverzweigungseinrichtung 18 verbunden ist. Ein erster Ausgang der weiteren Signalverzweigungseinrichtung 27 ist mit einem ersten Filterelement 6a verbunden. Ein weiterer Ausgang der weiteren Signalverzweigungseinrichtung 27 ist mit einem weiteren Filterelement 6b verbunden. Die Filterelemente 6a, 6b filtern jeweils das Sendesignal 4 des Endgeräts 3 in Anteile mit verschiedenen Frequenzbereichen, wobei die Frequenzbereiche der beiden Filterelemente 6a, 6b gleich sind. Die Anteile werden dann über Eingangssignalzweige E1,..., E5 an die entsprechende Schalteinheit S1, S2 übertragen. Hierbei werden über korrespondierende Eingangssignalzweige E1,..., E5 der Schalteinheiten S1, S2 jeweils Signalanteile mit gleichem Frequenzbereich übertragen.

Mittels der ersten Schalteinheit S1 ist jeder der Eingangssignalzweige E1, ..., E5 mit dem Ausgangssignalzweig A1 der ersten Schalteinheit S1 verbindbar, wobei jedoch zu einem Zeitpunkt nur ein Eingangssignalzweig E1, ..., E5 mit dem Ausgangssignalzweig A1 verbindbar ist. Entsprechend ist mittels der weiteren Schalteinheit S2 jeder der Eingangssignalzweige E1, ..., E5 mit dem Ausgangssignalzweig A2 der weiteren Schalteinheit S2 verbindbar, wobei zu einem Zeitpunkt nur ein Eingangssignalzweig E1, ..., E5 mit dem Ausgangssignalzweig A2 der weiteren Schalteinheit S2 verbindbar ist.

Zur Verbindung der Eingangssignalzweige E1, ..., E5 mit dem Ausgangssignalzweig A1, A2 weist jede Schalteinheit S1, S2 jeweils fünf Schaltelemente auf. So ist z.B. mittels des ersten Schaltelementes der ersten Schalteinheit S1 ein erster Eingangssignalzweig E1 mit dem Ausgangssignalzweig A1 der ersten Schalteinheit S1 verbindbar. Entsprechend ist der erste Eingangssignalzweig E1 mittels eines ersten Schaltelements mit dem Ausgangssignalzweig A2 der weiteren Schalteinheit S2 verbindbar.

In Fig. 2 ist durch durchgezogene Linien dargestellt, dass ein erster Eingangssignalzweig E1 mittels eines ersten Schaltelements der ersten Schalteinheit S1 mit dem Ausgangssignalzweig A1 der ersten Schalteinheit S1 verbunden ist. Weiter ist dargestellt, dass der erste Eingangssignalzweig E1 mittels des ersten Schaltelements der weiteren Schalteinheit S2 mit dem Ausgangssignalzweig A2 der weiteren Schalteinheit S2 verbunden ist.

Der Ausgangssignalzweig A2 der weiteren Schalteinheit S2 entspricht dem in Fig. 1 dargestellten Ausgangssignalzweig A. Hinsichtlich der Bestimmung der Signaleigenschaften, der Signalart und der entsprechenden Ansteuerung der Teilzweig-Schalteinheit 20, der Verstärkereinrichtungen 7a,...,7e und der Antennen-Schalteinheit 21 kann somit auf die Ausführungen zu Fig. 1 verwiesen werden. Auch bezüglich der Bestimmung des Standards einer über das auf dem Ausgangssignalzweig A2 der weiteren Schalteinheit S2 anliegenden Signals erfolgenden Kommunikation sowie einer Schätzung eines zukünftigen zeitlichen Verlaufs des Signals durch die Steuer- und Auswerteeinrichtung 19 und der darauf basierenden Steuerung der Verstärkereinrichtungen 7a, ..., 7e sowie der Teilzweig-Schalteinheit 20 und der Antennen-Schalteinheit 21 kann auf die Ausführungen zu Fig. 1 verwiesen werden.

Weiter dargestellt sind eine erste und eine weitere Steuereinrichtung 8, 9, durch die jeweils die erste und die weitere Schalteinheit S1, S2, insbesondere Schaltelemente der entsprechenden Schalteinheit S1, S2, steuerbar sind. Die Steuereinrichtungen 8, 9 sind signaltechnisch mit der Steuer- und Auswerteeinrichtung 19 verbunden. Somit kann auch die Steuer- und Auswerteeinrichtung 19 über die Steuereinrichtungen 8, 9 die Schalteinheiten S1, S2 steuern.

Hierbei kann die Steuerung der Schaltelemente der ersten Schalteinheit S1 unabhängig von der Steuerung der Schaltelemente der weiteren Schalteinheit S2 erfolgen. Insbesondere können die Schaltelemente der ersten Schalteinheit S1 derart periodisch geöffnet und geschlossen werden, dass die Eingangssignalzweige E1, ..., E5 periodisch, insbesondere mit einer vorbestimmten Schaltfrequenz, mit dem Ausgangssignalzweig A1 der ersten Schalteinheit S1 verbunden werden, wobei während einer gesamten Schaltperiode jeder der Eingangssignalzweige E1, ..., E5 mindestens einmal mit dem Ausgangssignalzweig A1 der ersten Schalteinheit S1 verbunden ist. Dieses periodische Verbinden kann insbesondere dann initiiert oder begonnen werden, wenn durch die Steuer- und Auswerteeinrichtung 19 detektiert wird, dass auf dem Ausgangssignalzweig A2 der weiteren Schalteinheit S2 kein Signal mehr anliegt. Während dieser gesamten Schaltperiode können mittels der Steuer- und Auswerteeinrichtung 19 die Signaleigenschaften der auf dem Ausgangssignalzweigs A1 der ersten Schalteinheit S1 anliegenden Signale bestimmt werden. In Abhängigkeit dieser Signaleigenschaften kann bestimmt werden, ob ein Eingangssignalzweig E1, ..., E5 ein aktivierter Signalzweig ist, wobei der aktivierte Signalzweig mit einem Signal beaufschlagt ist. Überträgt das Endgerät 3 beispielsweise ein Sendesignal auf dem Frequenzband, welches über den ersten Eingangssignalzweig E1 übertragen wird, so kann mittels der Steuer- und Auswerteeinrichtung 19 detektiert werden, dass auf dem ersten Eingangssignalzweig E1 ein Signal mit einem Signalpegel, der insbesondere höher als ein vorbestimmter Schwellwert sein kann, anliegt. Die Detektion eines aktivierten Eingangssignalzweiges E1, ..., E5 kann alternativ oder kumulativ auch dann erfolgen, indem die auf jedem der Eingangssignalzweige E1, ..., E5 vorhandenen Signalpegel, z.B. während einer gesamten Schaltperiode, erfasst und miteinander verglichen werden, wobei derjenige Eingangssignalzweig E1, ..., E5 als aktivierter Eingangssignalzweig E1, ..., E5 bestimmt wird, der den höchsten Signalpegel aufweist.

Die Steuer- und Auswerteeinrichtung 19 kann dann Informationen bezüglich des aktivierten Eingangssignalzweigs E1, ..., E5 an die weitere Steuereinrichtung 9 übertragen, wobei die weitere Steuereinrichtung 9 das entsprechende Schaltelement der weiteren Schalteinheit S2 derart ansteuert, dass der Ausgangssignalzweig A2 der weiteren Schalteinheit S2 mit dem aktivierten Eingangssignalzweig E1, ..., E5 verbunden wird. Diese Verbindung kann aufrechterhalten werden, bis ein vom bisher aktivierten Eingangssignalzweig E1, ..., E5 verschiedener Eingangssignalzweig E1, ..., E5 als aktivierter Eingangssignalzweig E1, ..., E5 detektiert wird. Somit wird also jeweils der aktivierte Eingangssignalzweig E1, ..., E5 mit dem Ausgangssignalzweig A2 der weiteren Schalteinheit S2 signaltechnisch verbunden. Wechselt z.B. das Endgerät 3 den Frequenzbereich, in welchem das gesendete Signal 4 gesendet wird, so kann dies schnell und zuverlässig durch die Analyse des auf dem Ausgangssignalzweig A1 der ersten Schalteinheit S1 anliegenden Signals detektiert werden, wodurch ohne großen Zeitverlust das nunmehr in einem neuen Frequenzbereich gesendete Sendesignal 4 auf den Ausgangssignalzweig A2 der weiteren Schalteinheit S2 geschaltet werden kann.

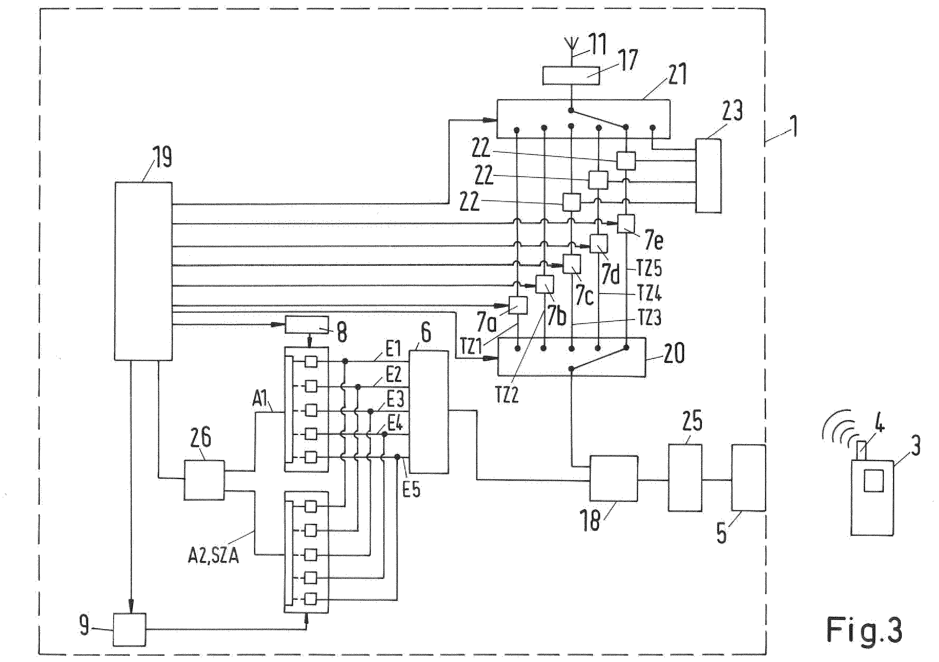

In Fig. 3 ist ein schematisches Schaltbild einer erfindungsgemäßen Signalkopplungseinrichtung 1 in einer weiteren Ausführungsform dargestellt.

Im Unterschied zu der in Fig. 2 dargestellten Signalkopplungseinrichtung 1 ist der weitere Ausgang der Signalverzweigungseinrichtung 18 mit dem Filterelement 6 verbunden. Das Filterelement 6 filtert das Sendesignal 4 des Endgeräts 3 in Anteile mit verschiedenen Frequenzbereichen. Die Anteile werden dann über Eingangssignalzweige E1,..., E5 an die erste Schalteinheit S1 und die weitere Schalteinheit S2 übertragen.

Weiter sind korrespondierende Eingangsanschlüsse der ersten Schalteinheit S1 und der weiteren Schalteinheit S2 mit demselben Eingangssignalzweig E1,..., E5 verbunden.

Hierbei weist ein Eingangssignalzweig E1, ..., E5 einen gemeinsamen Teilabschnitt, einen Abzweigepunkt, einen ersten Teilabschnitt und einen weiteren Teilabschnitt auf, wobei der gemeinsame Teilabschnitt im Abzweigepunkt in den ersten und weiteren Teilabschnitt verzweigt, wobei der erste Teilabschnitt mit einem der Eingangsanschlüsse der ersten Schalteinheit S1 und der weitere Teilabschnitt mit einem korrespondierenden Eingangsanschluss der weiteren Schalteinheit S2 verbunden ist.

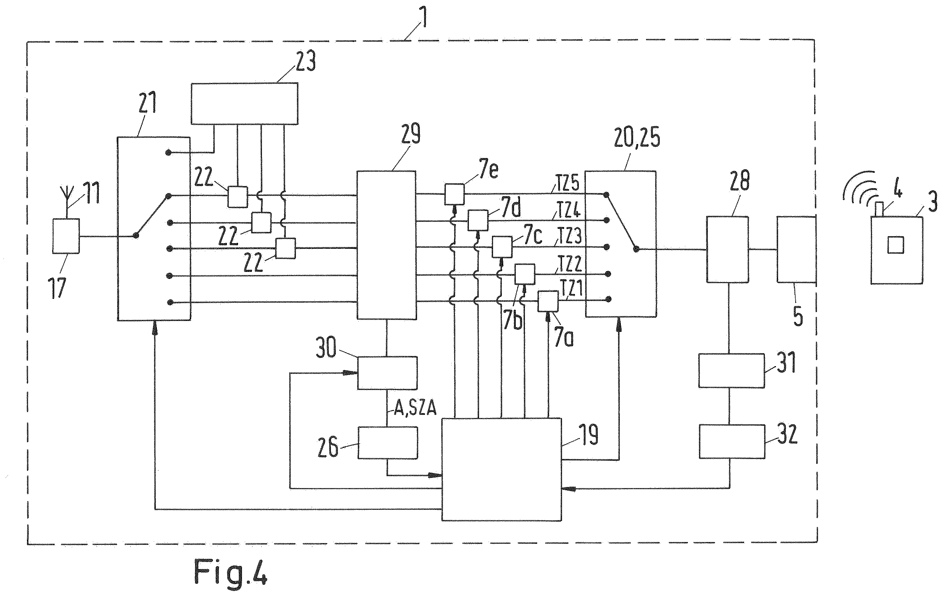

Hinsichtlich der weiteren Ausbildung und Funktion der in Fig. 3 dargestellten Signalkopplungseinrichtung 1 kann auf die Erläuterungen zu Fig. 2 verwiesen werden. In Fig. 4 ist ein schematisches Schaltbild einer erfindungsgemäßen Signalkopplungsvorrichtung 1 in einer weiteren Ausführungsform dargestellt. Wie in Fig. 1 ist auch in Fig. 4 ein Empfangsabschnitt 23 der Signalkopplungseinrichtung 1 nur schematisch dargestellt. Die Signalkopplungseinrichtung 1 umfasst eine endgeräteseitige Signalschnittstelle 5 zum Empfang der Sendesignale 4 des Endgerätes 3. Die Signalschnittstelle 5 kann selbstverständlich auch derart ausgebildet sein, dass über die Signalschnittstelle 5 Signale von der Signalkopplungseinrichtung 1 an das Endgerät 3 gesendet werden können. Die Signalschnittstelle 5 ist über eine Kopplereinrichtung 28 mit einer Teilzweig-Schalteinheit 20 verbunden. Die Kopplereinrichtung 28 koppelt einen Teil des von der endgeräteseitigen Schnittstelle 5 zur Teilzweig-Schalteinheit 20 übertragenen Sendesignals aus. Dies wird nachfolgend noch näher erläutert.

Die Signalkopplungsvorrichtung 1 umfasst, wie die in Fig. 1 dargestellte Ausführungsform, auch eine Filtereinrichtung 25, die der Übersichtlichkeit halber als Einheit mit der Teilzweig-Schalteinheit 20 dargestellt ist. Diese Einheit kann auch als Filter-Schalteinheit bezeichnet werden. Selbstverständlich kann die Filtereinrichtung 25 auch als von der Teilzweig-Schalteinheit 20 separates Bauteil ausgebildet sein. Diese Filtereinrichtung 25 kann beispielsweise einen oder mehrere Duplexfilter umfassen, die zum Übertragen von Signalen von der endgeräteseitigen Schnittstelle 5 zur Antenne 11 und von der Antenne 11 zur endgeräteseitigen Schnittstelle 5 dienen. Die Filtereinrichtung 25 kann hierzu mit dem Empfangsabschnitt 23 verbunden sein (nicht dargestellt). Die Teilzweig-Schalteinheit 20 weist eine vorbestimmte Anzahl von Ausgangsanschlüssen, in diesem Fall fünf Ausgangsanschlüsse, auf. Über die Teilzweig-Schalteinheit 20, die von einer Steuer- und Auswerteeinrichtung 19 steuerbar ist, kann der Eingangsanschluss der Teilzweig-Schalteinheit 20, der über die Koppeleinrichtung 28 mit der Signalschnittstelle 5 signaltechnisch verbunden ist, mit einem ausgewählten Ausgangsanschluss der Teilzweig-Schalteinheit 20 signaltechnisch verbunden werden. In Fig. 4 ist ein fünfter Ausgangsanschluss mit dem Eingangsanschluss verbunden. An jeden Ausgangsanschluss ist jeweils ein Teilzweig TZ1, TZ2, TZ3, TZ4, TZ5 angeschlossen. Ein erster und ein zweiter Teilzweig TZ1, TZ2 kann zur Übertragung von Zeitduplex-Signalen, beispielsweise von Signalen gemäß einem GSM-Standard, dienen. Ein dritter, ein vierter und ein fünfter Teilzweig TZ3, TZ4, TZ5 kann zur Übertragung von Frequenzduplex-Signalen, beispielsweise von Signalen gemäß einem UMTS- oder einem LTE-Standard, dienen.

Die Filtereinrichtung 25 ist hierbei derart ausgebildet, dass Frequenzbereiche von Frequenzen, die zur Übertragung von Signalen, insbesondere von Sendesignalen, gemäß den entsprechenden Standards dienen, aus dem von der endgeräteseitigen Schnittstelle 5 an die Schalt-Filtereinheit übertragenen Signal herausgefiltert werden. Dies kann bedeuten, dass Signale mit Frequenzen, die nicht in den entsprechenden Frequenzbereichen liegen, geschwächt werden.

In jedem Teilzweig TZ1, ..., TZ5 ist jeweils eine Verstärkereinrichtung 7a, 7b, 7c, 7d, 7e angeordnet mittels derer das auf dem entsprechenden Teilzweig TZ1, TZ2, ..., TZ5 anliegenden Signal verstärkt wird. Die Verstärkereinrichtungen 7a, ..., 7e können hierbei wie die Verstärkereinrichtungen 7a, ..., 7e der in Fig. 1 dargestellten Ausführungsform ausgebildet sein. Die Teilzweig-Schalteinheit 20 ist über die Teilzweige TZ1, ..., TZ5 mit einer Antennen-Schalteinheit 21 verbunden. In allen Teilzweige TZ1, ..., TZ5 können Verstärkereinrichtungen 7a, ..., 7e und eine weitere Koppeleinrichtung 29 angeordnet sein. In ausgewählten Teilzweigen TZ3, ..., TZ5 können Duplex-Filter 22 angeordnet sein. Die Antennen-Schalteinheit 21 und die Duplex-Filter 22 können hierbei wie die Antennen-Schalteinheit 21 und die Duplex-Filter 22 der in Fig. 1 dargestellten Ausführungsform ausgebildet sein. Die weitere Koppeleinrichtung 29 koppelt aus jedem der Teilzweige TZ1, ..., TZ5 einen Teil des über den entsprechenden Teilzweig TZ1, ..., TZ5 übertragenen Signals aus. Beispielsweise kann die weitere Koppeleinrichtung 29 je eine Koppeleinheit (nicht dargestellt) pro Teilzweig TZ1, ..., TZ5 umfassen, wobei Signalausgänge der Koppeleinheiten signaltechnisch in Reihe geschaltet sind. Diese Reihenschaltung kann entsprechend einer so genannten Daisy-Chain-Schaltung erfolgen.

Der ausgekoppelte Signalteil wird an eine weitere Schalt-Filtereinheit 30 übertragen. Die weitere Schalt-Filtereinheit 30 kann ebenfalls eine Filtereinrichtung, insbesondere eine mehrere Bandpassfilter umfassende Filtereinrichtung, umfassen. Auch diese Filtereinrichtung kann derart ausgebildet sein, dass Frequenzbereiche von Frequenzen, die zur Übertragung von Signalen, insbesondere von Sendesignalen, über die einzelnen Teilzweige TZ1, ..., TZ5 dienen, aus dem von der weiteren Koppeleinrichtung 29 an die weitere Schalt-Filtereinheit 30 übertragenen Signal herausgefiltert werden. Ein Schaltteil der Schalt-Filtereinheit 30 kann einzelne Filter, insbesondere einen der erläuterten Bandpassfilter, in einen Signalzweig zwischen Ein- und Ausgangsanschluss der Schalt-Filtereinheit 30 schalten.

An einem Ausgangssignalzweig A der weiteren Schalt-Filtereinheit 30 liegt somit ein Teil eines Signals an, welches über einen der Teilzweige TZ1, ..., TZ5 übertragen wird. Dieser Ausgangssignalzweig A der weiteren Schalt-Filtereinheit 30 bildet den Detektions-Signalzweigabschnitt SZA aus. Weiter ist dargestellt, dass die weitere Filter-Schalteinheit 30 über den Ausgangssignalzweig A und eine Detektoreinrichtung 26 mit der Steuer- und Auswerteeinrichtung 19 verbunden ist. Die Detektoreinrichtung 26 erzeugt ein von einem Signalpegel eines auf dem Ausgangssignalzweig A anliegenden Signals abhängiges Ausgangssignal. Insbesondere kann das Ausgangssignal der Detektoreinrichtung 26 ein analoges (Spannungs-)Signal sein, dessen Amplitude proportional zu dem Signalpegel ist.

Die Verstärkereinrichtungen 7a, ..., 7e sind von der Steuer- und Auswerteeinrichtung 19 steuerbar, insbesondere aktivierbar und deaktivierbar. Die Teilzweig-Schalteinheit 20, die Antennenschalteinheit 21 und die weitere Schalt-Filtereinheit 30 sind von der Steuer- und Auswerteeinrichtung 19 steuerbar, insbesondere sind deren Schaltzustände einstellbar.

Die Steuer- und Auswerteeinrichtung 19 wertet einen zeitlichen Verlauf eines Signalpegels des auf dem Ausgangssignalzweig A anliegenden Signals aus und bestimmt, ob ein Zeitduplex-Signal oder ein Frequenzduplex-Signal vorliegt.

In Abhängigkeit der Signalart werden dann die Teilzweig-Schalteinheit 20 und die Antennen-Schalteinheit 21 gesteuert. Weiter kann auch die weitere Schalt-Filtereinheit 30 in Abhängigkeit der Signalart von der Steuer- und Auswerteeinrichtung 19 gesteuert werden. Weiter kann ein Standard einer über das auf dem Ausgangssignalzweig A anliegenden Signals erfolgenden Kommunikation bestimmt werden. Diesbezüglich kann auf die Ausführungen zu der in Fig.1 dargestellten Ausführungsform verwiesen werden, die auch für die in Fig. 4 dargestellte Ausführungsform zutreffen.

Weiter kann mittels der Steuer- und Auswerteeinrichtung 19 ein zukünftiger Signalverlauf des auf dem Ausgangssignalzweig A anliegenden Signals geschätzt werden. Weiter kann durch die Steuer- und Auswerteeinrichtung 19 in Abhängigkeit des zukünftigen Signalverlaufs die entsprechende Verstärkereinrichtung 7a, 7b sowie die Teilzweig-Schalteinheit 20 und/oder die Antennen-Schalteinheit 21 gesteuert werden. Gegebenenfalls kann auch die weitere Filter-Schalteinheit 30 in Abhängigkeit des zukünftigen Signalverlaufs durch die Steuer- und Auswerteeinrichtung gesteuert werden. Diesbezüglich kann ebenfalls auf die Ausführungen zu der in Fig.1 dargestellten Ausführungsform verwiesen werden, die auch für die in Fig. 4 dargestellte Ausführungsform zutreffen.

Weiter umfasst die Signalkopplungsvorrichtung 1 eine weitere Filtereinrichtung 31. Auch diese kann mehrere Bandpassfilter umfassen. Weiter kann die weitere Filtereinrichtung 31 derart ausgebildet sein, dass Frequenzbereiche von Frequenzen, die zur Übertragung von Signalen, insbesondere von Sendesignalen, über die einzelnen Teilzweige TZ1, ..., TZ5 bzw. von Sendesignalen gemäß der erläuterten Standards dienen, aus dem von der Koppeleinrichtung 28 an die weitere Filtereinrichtung 31 übertragenen Signal herausgefiltert werden. Die weitere Filtereinrichtung 31 ist mit einer weiteren Detektoreinrichtung 32 signaltechnisch verbunden. Diese kann ein Ausgangssignal erzeugen, welches abhängig von einem Signalpegel eines Signals ist, welches von der weiteren Filtereinrichtung 31 an die weitere Detektoreinrichtung 32 übertragen wird. Insbesondere kann auch dieses Ausgangssignal der weiteren Detektoreinrichtung 31 ein analoges (Spannungs-)Signal sein, dessen Amplitude proportional zu dem Signalpegel ist. Die Steuer- und Auswerteeinrichtung 19, die signaltechnisch mit der weiteren Detektoreinrichtung 32 verbunden ist, wertet einen zeitlichen Verlauf des Signalpegels aus und bestimmt, ob ein Sendesignal von dem Endgerät 3 an die Teilzweig-Schalteinheit 20 übertragen wird. Somit dient die Teilschaltung, die aus der Koppeleinrichtung 28, der weiteren Filtereinrichtung 31 und der weiteren Detektoreinrichtung 32 besteht, zur Detektion, ob ein Sendesignal von dem Endgerät 3 übertragen wird.

Wird ein übertragenes Sendesignal detektiert, so kann die Auswerte- und Steuereinrichtung 19 die Teilzweig-Schalteinheit 20, die Antennen-Schalteinheit 21 sowie die weitere Filter-Schalteinheit 30 synchron derart ansteuern, dass nacheinander jeder Teilzweig TZ1, ..., TZ5 mit dem Ausgangssignalzweig A gekoppelt wird. Auf diese Weise kann eine Detektion des aktuell aktivierten Teilzweigs TZ1, ..., TZ5 initiiert und durchgeführt werden. Wird der aktuell aktivierte Teilzweig TZ1, ..., TZ5 detektiert, so kann die Detektion beendet und der aktuell aktivierte Teilzweig mit dem Ausgangssignalzweig A verbunden werden. Wird kein übertragenes Sendesignal mehr detektiert, so kann der zuletzt aktivierte Teilzweig mit dem Ausgangssignalzweig verbunden bleiben. Eine erneute Detektion kann initiiert und durchgeführt werden, wenn wieder ein übertragenes Sendesignal detektiert wird.

## Patentansprüche

1. Verfahren zum Betrieb einer Signalkopplungseinrichtung (1), wobei die Signalkopplungseinrichtung (1) mindestens einen Signalzweigabschnitt (SZA) umfasst, der signaltechnisch mit einer endgeräteseitigen Schnittstelle (5) der Signalkopplungseinrichtung (1) verbunden oder verbindbar ist, wobei mindestens eine Signaleigenschaft eines auf dem mindestens einen Signalzweigabschnitt (SZA) anliegenden Signals bestimmt wird, wobei in Abhängigkeit der mindestens einen Signaleigenschaft eine Signalart bestimmt wird, wobei als Signalart ein Zeitduplex-Signal oder ein Frequenzduplex-Signal bestimmt wird, wobei eine signalartspezifische Steuerung eines Betriebs mindestens einer Signalverarbeitungseinrichtung erfolgt,
wobei ein zukünftiger Signalverlauf des anliegenden Signals geschätzt wird, wobei die signalartspezifische Steuerung der mindestens einen Signalverarbeitungseinrichtung in Abhängigkeit des geschätzten zeitlichen Verlaufs erfolgt, wobei ein Anfangszeitpunkt mindestens eines zukünftigen Sendezeitabschnitts und/oder ein Endzeitpunkt des mindestens einen zukünftigen Sendezeitabschnitts bestimmt wird/werden, wobei der Betrieb der mindestens einen Signalverarbeitungseinrichtung in Abhängigkeit des Anfangszeitpunkts und/oder des Endzeitpunkts gesteuert wird, **dadurch gekennzeichnet, dass** die Signalverarbeitungseinrichtung zeitlich vor dem Anfangszeitpunkt aktiviert wird und zeitlich nach dem Endzeitpunkt deaktiviert wird.

2. Verfahren nach Anspruch 1, **dadurch gekennzeichnet, dass** in Abhängigkeit der Signalart eine signalartspezifische Verbindung zwischen der endgeräteseitigen Schnittstelle (5) und einer antennenseitigen Schnittstelle (17) der Signalkopplungseinrichtung (1) hergestellt wird.

3. Verfahren nach Anspruch 1 oder 2, **dadurch gekennzeichnet, dass** die Signalverarbeitungseinrichtung eine Verstärkereinrichtung (7a,...,7e) ist.

4. Verfahren nach einem der Ansprüche 1 bis 3, **dadurch gekennzeichnet, dass** ein Standard einer über das anliegende Signal erfolgenden Kommunikation bestimmt wird, wobei der zukünftige Signalverlauf zusätzlich in Abhängigkeit von vorbekannten Eigenschaften des Standards bestimmt wird.

5. Verfahren nach einem der Ansprüche 1 bis 4, **dadurch gekennzeichnet, dass** eine Abweichung des geschätzten Signalverlaufs von einem sich tatsächlich einstellenden Signalverlauf bestimmt wird, wobei eine erneute Schätzung des zukünftigen Signalverlaufs durchgeführt wird, falls eine Abweichung größer als ein vorbestimmtes Maß ist.

6. Verfahren nach einem der Ansprüche 1 bis 5, **dadurch gekennzeichnet, dass** eine Schalteinheit (S, S1, S2) über eine erste Gruppe von mindestens zwei Eingangssignalzweigen (E1,...,E5) mit der endgeräteseitigen Schnittstelle (5) verbunden ist, wobei der mindestens eine Signalzweigabschnitt (SZA) einen Ausgangssignalzweig (A, A2) der Schalteinheit (S, S2) bildet oder mit dem Ausgangssignalzweig (A, A2) verbunden ist, wobei durch die Schalteinheit (S, S2) ein ausgewählter Eingangssignalzweig (E1, ..., E5) aus der ersten Gruppe von mindestens zwei Eingangssignalzweigen (E1, ..., E5) mit dem Ausgangssignalzweig (A, A2) verbunden wird.

7. Verfahren nach Anspruch 6, **dadurch gekennzeichnet, dass** eine erste Schalteinheit (S1) über mindestens zwei Eingangssignalzweige (E1,...,E5) mit der endgeräteseitigen Schnittstelle (5) verbunden ist, wobei durch die erste Schalteinheit (S1) ein ausgewählter Eingangssignalzweig (E1, ..., E5) aus der ersten Gruppe von Eingangssignalzweigen (E1, ..., E5) mit einem Ausgangssignalzweig (A1) der ersten Schalteinheit (S1) verbunden wird, wobei eine weitere Schalteinheit (S2) über mindestens zwei Eingangssignalzweige einer weiteren Gruppe von Eingangssignalzweigen mit der endgeräteseitigen Schnittstelle (5) verbunden ist, wobei ein ausgewählter Eingangssignalzweig aus der weiteren Gruppe von Eingangssignalzweigen (E1, ..., E5) mit einem Ausgangssignalzweig (A2) der weiteren Schalteinheit (S2) verbunden wird, wobei der mindestens eine Signalzweigabschnitt (SZA) den Ausgangssignalzweig (A2) der weiteren Schalteinheit (S2) bildet oder mit dem Ausgangssignalzweig (A2) der weiteren Schalteinheit (S2) verbunden ist.

8. Verfahren nach Anspruch 6 oder 7, **dadurch gekennzeichnet, dass** ein aktivierter Eingangssignalzweig (E1, ..., E5) bestimmt wird, wobei der aktivierte Eingangssignalzweig (E1, ..., E5) mit dem Ausgangssignalzweig (A, A2) einer Schalteinheit (S, S2) verbunden wird.

9. Verfahren nach einem der Ansprüche 1 bis 5, **dadurch gekennzeichnet, dass** die endgeräteseitige Schnittstelle (5) mit einem ausgewählten Teilzweig (TZ1, ..., TZ5) aus einer Gruppe von mindestens zwei Teilzweigen (TZ1, ..., TZ5) verbunden wird, wobei die endgeräteseitige Schnittstelle (5) über jeden der Teilzweige (TZ1, ..., TZ5) aus der Gruppe von mindestens zwei Teilzweigen (TZ1, ..., TZ5) mit einer antennenseitigen Schnittstelle (17) verbindbar ist, wobei der mindestens eine Signalzweigabschnitt (SZA) mit dem ausgewählten Teilzweig (TZ1,...,TZ5) verbunden wird.

10. Verfahren nach Anspruch einem der Ansprüche 1 bis 9, **dadurch gekennzeichnet, dass** mittels einer Einrichtung zur Detektion eines Sendesignals ein von der endgeräteseitigen Schnittstelle (5) übertragenes Sendesignal detektiert wird.

11. Signalkopplungseinrichtung, wobei die Signalkopplungseinrichtung (1) mindestens einen Signalzweigabschnitt (SZA) umfasst, der signaltechnisch mit einer endgeräteseitigen Schnittstelle (5) der Signalkopplungseinrichtung (1) verbunden oder verbindbar ist, wobei die Signalkopplungseinrichtung (1) mindestens eine Steuer- und Auswerteeinrichtung (19) umfasst, wobei mittels der Steuer- und Auswerteeinrichtung (19) mindestens eine Signaleigenschaft eines auf dem mindestens einen Signalzweigabschnitt (SZA) anliegenden Signals bestimmbar ist, wobei in Abhängigkeit der mindestens einen Signaleigenschaft eine Signalart bestimmbar ist, wobei als Signalart ein Zeitduplex-Signal oder ein Frequenzduplex-Signal bestimmbar ist, wobei in Abhängigkeit der Signalart ein signalartspezifischer Betrieb mindestens einer Signalverarbeitungseinrichtung einstellbar ist,
wobei
ein zukünftiger Signalverlauf des anliegenden Signals schätzbar, wobei die signalartspezifische Steuerung der mindestens einen Signalverarbeitungseinrichtung in Abhängigkeit des geschätzten zeitlichen Verlaufs erfolgt, wobei ein Anfangszeitpunkt mindestens eines zukünftigen Sendezeitabschnitts und/oder ein Endzeitpunkt des mindestens einen zukünftigen Sendezeitabschnitts bestimmbar ist/sind, wobei der Betrieb der mindestens einen Signalverarbeitungseinrichtung in Abhängigkeit des Anfangszeitpunkts und/oder des Endzeitpunkts steuerbar ist, **dadurch gekennzeichnet, dass**
die Signalverarbeitungseinrichtung zeitlich vor dem Anfangszeitpunkt aktiviert wird und zeitlich nach dem Endzeitpunkt deaktiviert wird.

## Claims

1. Method for operating a signal coupling apparatus (1), wherein the signal coupling apparatus (1) comprises at least one signal branch section (SZA) which is or can be connected to a terminal-side interface (5) of the signal coupling apparatus (1) using signalling, wherein at least one signal property of a signal present on the at least one signal branch section (SZA) is determined, wherein a signal type is determined on the basis of the at least one signal property, wherein a time duplexing signal or a frequency duplexing signal is determined as the signal type, wherein signal type-specific control of a mode of at least one signal processing apparatus is effected,
wherein a future signal profile of the signal that is present is estimated, wherein the signal type-specific control of the at least one signal processing apparatus is effected on the basis of the estimated time profile, wherein a starting time of at least one future transmission time segment and/or an ending time of the at least one future transmission time segment is/are determined, wherein the mode of the at least one signal processing apparatus is controlled on the basis of the starting time and/or the ending time, **characterised in that**
the signal processing apparatus is activated at a time before the starting time and deactivated at a time after the ending time.

2. Method according to claim 1, **characterised in that** a signal type-specific connection is established between the terminal-side interface (5) and an antenna-side interface (17) of the signal coupling apparatus (1) on the basis of the signal type.

3. Method according to claim 1 or 2, **characterised in that** the signal processing apparatus is an amplifier apparatus (7a,...,7e).

4. Method according to any of claims 1 to 3, **characterised in that** a standard of a communication being effected using the signal that is present is determined, wherein the future signal profile is additionally determined on the basis of previously known properties of the standard.

5. Method according to any of claims 1 to 4, **characterised in that** a deviation of the estimated signal profile from an actually occurring signal profile is determined, wherein a fresh estimation of the future signal profile is performed if a deviation is greater than a predetermined extent.

6. Method according to any of claims 1 to 5, **characterised in that** a switching unit (S, S1, S2) is connected to the terminal-side interface (5) via a first group of at least two input signal branches (E1,...,E5), wherein the at least one signal branch section (SZA) forms an output signal branch (A, A2) of the switching unit (S, S2) or is connected to the output signal branch (A, A2), wherein the switching unit (S, S2) connects a selected input signal branch (E1, ..., E5) from the first group of at least two input signal branches (E1, ..., E5) to the output signal branch (A, A2).

7. Method according to claim 6, **characterised in that** a first switching unit (S1) is connected to the terminal-side interface (5) via at least two input signal branches (E1,..., E5), wherein the first switching unit (S1) connects a selected input signal branch (E1, ..., E5) from the first group of input signal branches (E1, ..., E5) to an output signal branch (A1) of the first switching unit (51), wherein a further switching unit (S2) is connected to the terminal-side interface (5) via at least two input signal branches of a further group of input signal branches, wherein a selected input signal branch from the further group of input signal branches (E1, ..., E5) is connected to an output signal branch (A2) of the further switching unit (S2), wherein the at least one signal branch section (SZA) forms the output signal branch (A2) of the further switching unit (S2) or is connected to the output signal branch (A2) of the further switching unit (S2).

8. Method according to claim 6 or 7, **characterised in that** an activated input signal branch (E1, E5) is determined, wherein the activated input signal branch (E1, ..., E5) is connected to the output signal branch (A, A2) of a switching unit (S, S2).

9. Method according to any of claims 1 to 5, **characterised in that** the terminal-side interface (5) is connected to a selected sub-branch (TZ1, ..., TZ5) from a group of at least two sub-branches (TZ1, ..., TZ5), wherein the terminal-side interface (5) can be connected to an antenna-side interface (17) via each of the sub-branches (TZ1, ..., TZ5) from the group of at least two sub-branches (TZ1, ..., TZ5), wherein the at least one signal branch section (SZA) is connected to the selected sub-branch (TZ1, ..., TZ5).

10. Method according to any of claims 1 to 9, **characterised in that** a transmission signal transmitted by the terminal-side interface (5) is detected by means of an apparatus for detecting a transmission signal.

11. Signal coupling apparatus, wherein the signal coupling apparatus (1) comprises at least one signal branch section (SZA) which is or can be connected to a terminal-side interface (5) of the signal coupling apparatus (1) using signalling, wherein the signal coupling apparatus (1) comprises at least one control and evaluation apparatus (19), wherein at least one signal property of a signal present on the at least one signal branch section (SZA) can be determined by means of the control and evaluation apparatus (19), wherein a signal type can be determined on the basis of the at least one signal property, wherein a time duplexing signal or a frequency duplexing signal can be determined as the signal type, wherein a signal type-specific mode of at least one signal processing apparatus can be set on the basis of the signal type, wherein
a future signal profile of the signal that is present can be estimated, wherein the signal type-specific control of the at least one signal processing apparatus is effected on the basis of the estimated time profile, wherein a starting time of at least one future transmission time segment and/or an ending time of the at least one future transmission time segment can be determined, wherein the mode of the at least one signal processing apparatus can be controlled on the basis of the starting time and/or the ending time, **characterised in that**
the signal processing apparatus is activated at a time before the starting time and deactivated at a time after the ending time.

## Revendications

1. Procédé de fonctionnement d'un appareil de couplage de signaux (1), dans lequel l'appareil de couplage de signaux (1) comporte au moins une section de branche de signaux (SZA) qui est ou peut être reliée en signal à une interface (5) côté terminal de l'appareil de couplage de signaux (1), dans lequel au moins une propriété de signal d'un signal appliqué sur l'au moins une section de branche de signaux (SZA) est déterminée, dans lequel en fonction de l'au moins une propriété de signal, un type de signal est déterminé, dans lequel comme type de signal, un signal à duplexage temporel ou un signal à duplexage de fréquence est déterminé, dans lequel une commande spécifique au type de signal d'un fonctionnement d'au moins un appareil de traitement de signal est effectuée,
dans lequel une allure de signal future du signal appliqué est estimée, dans lequel la commande spécifique au type de signal de l'au moins un appareil de traitement de signal est effectuée en fonction de l'allure temporelle estimée, dans lequel un moment de début au moins d'une section de temps d'émission future et/ou un moment de fin de l'au moins une section de temps d'émission future est/sont déterminé(s), dans lequel le fonctionnement de l'au moins un appareil de traitement de signal est commandé en fonction du moment de début et/ou du moment de fin, **caractérisé en ce que**
l'appareil de traitement de signal est activé temporellement avant le moment de début et est désactivé temporellement après le moment de fin.

2. Procédé selon la revendication 1, **caractérisé en ce qu'**en fonction du type de signal, une liaison spécifique au type de signal est établie entre l'interface côté terminal (5) et une interface côté antenne (17) de l'appareil de couplage de signaux (1).

3. Procédé selon la revendication 1 ou 2, **caractérisé en ce que** l'appareil de traitement de signal est un appareil d'amplification (7a,...,7e).

4. Procédé selon l'une quelconque des revendications 1 à 3, **caractérisé en ce qu'**une norme d'une communication s'effectuant par le biais du signal appliqué est déterminée, dans lequel l'allure de signal future est en outre déterminée en fonction de propriétés préconnues de la norme.

5. Procédé selon l'une quelconque des revendications 1 à 4, **caractérisé en ce qu'**un écart de l'allure de signal estimée par rapport à une allure de signal se réglant réellement est déterminé, dans lequel une nouvelle estimation de l'allure de signal future est réalisée, dans le cas où un écart est supérieur à un degré prédéterminé.

6. Procédé selon l'une quelconque des revendications 1 à 5, **caractérisé en ce qu'**une unité de commutation (S, S1, S2) est reliée par le biais d'un premier groupe d'au moins deux branches de signal d'entrée (E1,...,E5) à l'interface côté terminal (5), dans lequel l'au moins une section de branche de signaux (SZA) forme une branche de signal de sortie (A, A2) de l'unité de commutation (S, S2) ou est reliée à la branche de signal de sortie (A, A2), dans lequel une branche de signal d'entrée (E1, ..., E5) sélectionnée parmi le premier groupe d'au moins deux branches de signal d'entrée (E1, ..., E5) est reliée à la branche de signal de sortie (A, A2) par l'unité de commutation (S, S2).

7. Procédé selon la revendication 6, **caractérisé en ce qu'**une première unité de commutation (S1) est reliée par le biais d'au moins deux branches de signal d'entrée (E1, ..., E5) à l'interface côté terminal (5), dans lequel par la première unité de commutation (S1), une branche de signal d'entrée (E1, ..., E5) sélectionnée parmi le premier groupe de branches de signal d'entrée (E1, ..., E5) est reliée à une branche de signal de sortie (A1) de la première unité de commutation (S1), dans lequel une autre unité de commutation (S2) est reliée par le biais d'au moins deux branches de signal d'entrée d'un autre groupe de branches de signal d'entrée à l'interface côté terminal (5), dans lequel une branche de signal d'entrée sélectionnée parmi l'autre groupe de branches de signal d'entrée (E1, ..., E5) est reliée à une branche de signal de sortie (A2) de l'autre unité de commutation (S2), dans lequel l'au moins une section de branche de signaux (SZA) forme la branche de signal de sortie (A2) de l'autre unité de commutation (S2) ou est reliée à la branche de signal de sortie (A2) de l'autre unité de commutation (S2).

8. Procédé selon la revendication 6 ou 7, **caractérisé en ce qu'**une branche de signal d'entrée (E1, E5) activée est déterminée, dans lequel la branche de signal d'entrée (E1, ..., E5) activée est reliée à la branche de signal de sortie (A, A2) d'une unité de commutation (S, S2).

9. Procédé selon l'une quelconque des revendications 1 à 5, **caractérisé en ce que** l'interface côté terminal (5) est relié à une branche partielle (TZ1, ..., TZ5) sélectionnée parmi un groupe d'au moins deux branches partielles (TZ1, ..., TZ5), dans lequel l'interface côté terminal (5) peut être reliée par le biais de chacune des branches partielles (TZ1, ..., TZ5) parmi le groupe d'au moins deux branches partielles (TZ1, ..., TZ5) à une interface (17) côté antenne, dans lequel l'au moins une section de branche de signaux (SZA) est reliée à la branche de signal (TZ1, ..., TZ5) sélectionnée.

10. Procédé selon l'une quelconque des revendications 1 à 9, **caractérisé en ce qu'**un signal d'émission transmis par l'interface côté terminal (5) est détecté au moyen d'un appareil de détection d'un signal d'émission.

11. Appareil de couplage de signaux, dans lequel l'appareil de couplage de signaux (1) comporte au moins une section de branche de signaux (SZA) qui est ou peut être reliée en signal à une interface côté terminal (5) de l'appareil de couplage de signaux (1), dans lequel l'appareil de couplage de signaux (1) comporte au moins un appareil de commande et d'évaluation (19), dans lequel au moyen de l'appareil de commande et d'évaluation (19), au moins une propriété de signal d'un signal appliqué sur l'au moins une section de branche de signaux (SZA) peut être déterminée, dans lequel en fonction de l'au moins une propriété de signal, un type de signal peut être déterminé, dans lequel comme type de signal, un signal à duplexage temporel ou un signal à duplexage de fréquence peut être déterminé, dans lequel en fonction du type de signal, un fonctionnement spécifique au type de signal au moins d'un appareil de traitement de signal est réglable, dans lequel
une allure de signal future du signal appliqué peut être estimée, dans lequel la commande spécifique au type de signal d'au moins un appareil de traitement de signal est effectuée en fonction de l'allure temporelle estimée, dans lequel un moment de début d'au moins une section de temps d'émission future et/ou un moment de fin de l'au moins une section de temps d'émission future peut/peuvent être déterminé(s), dans lequel le fonctionnement de l'au moins un appareil de traitement de signal peut être commandé en fonction du moment de début et/ou du moment de fin, **caractérisé en ce que**
l'appareil de traitement de signal est activé temporellement avant le moment de début et est désactivé temporellement après le moment de fin.
